# EUROPEAN PATENT APPLICATION

(11) **EP 4 572 291 A1**
(43) Date of publication of application: **18.06.2025**
(21) Application number: 23869789.0
(22) Date of filing: 27.06.2023
(51) Int. Cl.: H04L 65/1104

(54) **COMMUNICATION METHOD, APPARATUS, AND SYSTEM**

(30) Priority: 30.09.2022 CN 202211211992
(71) Applicant: Huawei Technologies Co., Ltd., Shenzhen, Guangdong 518129 (CN)
(72) Inventor: WU, Kanghua, Shenzhen, Guangdong 518129 (CN); HAO, Hongxia, Shenzhen, Guangdong 518129 (CN); YANG, Xiaogang, Shenzhen, Guangdong 518129 (CN); LI, Xiaomeng, Shenzhen, Guangdong 518129 (CN)
(74) Representative: Pfenning, Meinig & Partner mbB
(86) International application number: PCT/CN2023/102804
(87) International publication number: WO 2024/066541

(57) **Abstract**

This application relates to the field of communication technologies, and discloses a communication method, apparatus, and system, to improve efficiency of data channel negotiation. The method includes: A data channel control device may negotiate a bootstrap data channel with a terminal device in a call service, and send indication information to a call value-added control device, to indicate the call value-added service control device to negotiate an application data channel with the terminal device. The bootstrap data channel is used to transmit an additional application, the additional application is configured to transmit additional communication information through the application data channel, and the additional communication information is communication information generated by the additional application in response to an operation performed by a user on media content of a call value-added service provided on the terminal device.

## Description

This application claims priority to Chinese Patent Application No. 202211211992.3, filed with the China National Intellectual Property Administration on September 30, 2022 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

With continuous development of communication technologies, a voice service in a 4th generation (4th generation, 4G) network, for example, a voice over internet protocol multimedia subsystem (internet protocol multimedia subsystem, IMS) (voice over LTE, VoLTE) service, and a voice service in a 5th generation (5th generation, 5G) network, for example, a voice over new radio (new radio, NR) (voice over NR, VoNR) service, have been widely used. The voice service may include a call value-added service. With the call value-added service, media content may be delivered via a call value-added service media device to a terminal device that subscribes to the call value-added service. For example, the call value-added service includes a ring back tone service or a ring tone service.

For example, for the ring back tone service, a message may be transmitted between a calling terminal device and a call value-added service control device based on a session initiation protocol (session initiation protocol, SIP), to implement the ring back tone service, so that a calling user enjoys audio and/or video experience during call waiting. For example, for the ring tone service, a message may be transmitted between a called terminal device and the call value-added service control device based on the SIP, to implement the ring tone service, so that a called user enjoys audio and/or video experience during ringing of the called terminal device. In this way, a call waiting phase can be more interesting, thereby greatly improving call experience of users.

To further improve call experience of users, the call value-added service is required to support user interaction. For example, after the call value-added service media device delivers the media content to the terminal device, in addition to the media content, the terminal device further presents an operable button, such as a "like" button or a "follow" button. A user may tap the operable button, and the terminal device generates and sends additional communication information in response to the tap operation of the user, so that a device that receives the additional communication information presents the corresponding additional communication information. However, it is difficult to transmit the additional communication information by transmitting a message based on the SIP. Therefore, a data channel technology is proposed in the industry. However, a problem such as low efficiency of data channel negotiation occurs when the additional communication information is transmitted based on the current data channel technology.

### SUMMARY

Embodiments of this application provide a communication method, apparatus, and system, to improve efficiency of data channel negotiation.

To achieve the foregoing objective, the following technical solutions are used in embodiments of this application:
According to a first aspect, a communication method is provided. The method may be performed by a data channel control device, or may be performed by a module used in the data channel control device, for example, a chip, a chip system, or a circuit. This is not limited herein. For ease of description, the following uses an example in which the method is performed by the data channel control device for description. The method includes: The data channel control device negotiates a bootstrap data channel with a terminal device in a call service. The bootstrap data channel is used to transmit an additional application, the additional application is configured to transmit additional communication information through an application data channel, and the additional communication information is communication information generated by the additional application in response to an operation performed by a user on media content of a call value-added service provided on the terminal device. The data channel control device sends indication information to a call value-added service control device. The indication information indicates the call value-added service control device to complete negotiation of the application data channel with the terminal device.

Based on the method provided in the first aspect, the data channel control device may negotiate the bootstrap data channel with the terminal device, and indicate to the call value-added service control device that the negotiation of the bootstrap data channel is completed, to trigger the call value-added service control device to negotiate the application data channel with the terminal device, so that the additional communication information is transmitted through the application data channel. In addition, the data channel control device may provide a data channel negotiation service. For a plurality of services including the call value-added service, the data channel control device may establish one bootstrap data channel to transmit an application corresponding to each service, which prevents a control device corresponding to each service from negotiating a bootstrap data channel separately to deliver an application of the service, thereby reducing a delay, saving a data channel resource, and improving efficiency of data channel negotiation.

In a possible implementation, the bootstrap data channel is a data channel between a data channel media device and the terminal device. The application data channel is a data channel between the data channel media device and the terminal device, or the application data channel is a data channel between a call value-added service media device and the terminal device.

Based on the foregoing possible implementation, the data channel control device may negotiate, with the terminal device, the bootstrap data channel between the data channel media device and the terminal device. The call value-added service control device may negotiate, with the terminal device, the application data channel between the data channel media device and the terminal device or the application data channel between the call value-added service media device and the terminal device.

In a possible implementation, the indication information includes a call service identifier and an identifier of the terminal device, and the call service identifier includes all or a part of information of a session identifier of the call service.

Based on the foregoing possible implementation, the data channel control device may send the call service identifier and the identifier of the terminal device to the call value-added service control device, so that the call value-added service control device finds the corresponding call service through matching based on the call service identifier, and determines, based on the identifier of the terminal device, to negotiate the application data channel with the terminal device.

In a possible implementation, that the data channel control device sends indication information to a call value-added service control device includes: The data channel control device sends a session initiation protocol SIP INFO message or a hypertext transfer protocol HTTP message to the call value-added service control device. The SIP INFO message or the HTTP message includes the indication information.

Based on the foregoing possible implementations, the indication information may be carried in the SIP INFO message or the HTTP message.

In a possible implementation, the call value-added service is a ring back tone service, and the terminal device is a calling terminal device; or the call value-added service is a ring tone service, and the terminal device is a called terminal device.

Based on the foregoing possible implementation, if the call value-added service is the ring back tone service, the data channel control device negotiates the bootstrap data channel with the calling terminal device, and triggers the call value-added service control device to negotiate the application data channel with the calling terminal device, so that additional communication information generated in response to an operation of a calling user can be transmitted through the application data channel. If the call value-added service is the ring tone service, the data channel control device negotiates the bootstrap data channel with the called terminal device, and triggers the call value-added service control device to negotiate the application data channel with the called terminal device, so that additional communication information generated in response to an operation of a called user can be transmitted through the application data channel.

In a possible implementation, before the data channel control device negotiates the bootstrap data channel with the terminal device in the call service, the method further includes: The data channel control device obtains user registration information of the call value-added service. The user registration information is used by the data channel control device to determine to negotiate the bootstrap data channel with the terminal device.

Based on the foregoing possible implementation, the data channel control device may determine, based on the user registration information, whether to negotiate the bootstrap data channel with the terminal device.

In a possible implementation, the call value-added service control device is a ring back tone service application server and/or a ring tone service application server.

Based on the foregoing possible implementation, the ring back tone service application server and/or the ring tone service application server may negotiate the application data channel with the terminal device.

According to a second aspect, a communication method is provided. The method may be performed by a call value-added service control device, or may be performed by a module used in the call value-added service control device, for example, a chip, a chip system, or a circuit. This is not limited herein. For ease of description, the following uses an example in which the method is performed by the call value-added service control device for description. The method includes: The call value-added service control device receives indication information from a data channel control device. The indication information indicates the call value-added control device to complete negotiation of an application data channel with a terminal device in a call service, the application data channel is used to transmit additional communication information, and the additional communication information is communication information generated by an additional application in response to an operation performed by a user on media content of a call value-added service provided on the terminal device. The call value-added service control device negotiates the application data channel with the terminal device.

Based on the method provided in the second aspect, the call value-added service control device may negotiate the application data channel with the terminal device based on the indication information sent by the data channel control device, so that the additional communication information is transmitted through the application data channel.

In a possible implementation, the application data channel is a data channel between a data channel media device and the terminal device, or the application data channel is a data channel between a call value-added service media device and the terminal device.

Based on the foregoing possible implementation, the call value-added service control device may negotiate, with the terminal device, the application data channel between the data channel media device and the terminal device or the application data channel between the call value-added service media device and the terminal device.

In a possible implementation, the indication information includes a call service identifier and an identifier of the terminal device, and the call service identifier includes all or a part of information of a session identifier of the call service.

Based on the foregoing possible implementation, the data channel control device may indicate the call service identifier and the identifier of the terminal device to the call value-added service control device, so that the call value-added service control device finds the corresponding call service through matching based on the call service identifier, and determines, based on the identifier of the terminal device, to negotiate the application data channel with the terminal device.

In a possible implementation, the call service identifier is used by the call value-added service control device to determine to negotiate the application data channel for the call service. The identifier of the terminal device is used by the call value-added service control device to determine to negotiate the application data channel with the terminal device.

Based on the foregoing possible implementation, the call value-added service control device may find the corresponding call service through matching based on the call service identifier, and determine, based on the identifier of the terminal device, to negotiate the application data channel with the terminal device.

In a possible implementation, that the call value-added service control device receives indication information from a data channel control device includes: The call value-added service control device receives a session initiation protocol SIP INFO message or a hypertext transfer protocol HTTP message from the data channel control device. The SIP INFO message or the HTTP message includes the indication information.

Based on the foregoing possible implementations, the indication information may be carried in the SIP INFO message or the HTTP message.

In a possible implementation, the call value-added service is a ring back tone service, and the terminal device is a calling terminal device.

Based on the foregoing possible implementation, if the call value-added service is the ring back tone service, the call value-added service control device negotiates the application data channel with the calling terminal device, so that additional communication information generated in response to an operation of a calling user can be transmitted through the application data channel.

In a possible implementation, that the call value-added service control device negotiates the application data channel with the terminal device includes: The call value-added service control device negotiates the application data channel with the terminal device after receiving a ringing message of a called terminal device.

Based on the foregoing possible implementation, the call value-added service control device may negotiate the application data channel with the terminal device after the called terminal device rings, so that the application data channel is negotiated for the call value-added service during negotiation of media content of the call value-added service. In this way, the application data channel is negotiated without an additional step in a call procedure.

In a possible implementation, the call value-added service is a ring tone service, and the terminal device is a called terminal device.

Based on the foregoing possible implementation, if the call value-added service is the ring tone service, the call value-added service control device negotiates the application data channel with the called terminal device, so that additional communication information generated in response to an operation of a called user can be transmitted through the application data channel.

In a possible implementation, that the call value-added service control device negotiates the application data channel with the terminal device includes: The call value-added service control device negotiates the application data channel with the terminal device after receiving a ringing message from the terminal device.

Based on the foregoing possible implementation, the call value-added service control device may negotiate the application data channel with the called terminal device after the called terminal device rings, so that the application data channel is negotiated for the call value-added service during negotiation of media content of the call value-added service. In this way, the application data channel is negotiated without an additional step in a call procedure.

In a possible implementation, the call value-added service control device is a ring back tone service application server and/or a ring tone service application server.

Based on the foregoing possible implementation, the ring back tone service application server and/or the ring tone service application server may negotiate the application data channel with the terminal device.

According to a third aspect, a communication method is provided. The method may be performed by a data channel control device, or may be performed by a module used in the data channel control device, for example, a chip, a chip system, or a circuit. This is not limited herein. For ease of description, the following uses an example in which the method is performed by the data channel control device for description. The method includes: The data channel control device negotiates a bootstrap data channel with a terminal device in a call service. The bootstrap data channel is used to transmit an additional application, the additional application is configured to transmit additional communication information through an application data channel, and the additional communication information is communication information generated by the additional application in response to an operation performed by a user on media content of a call value-added service provided on the terminal device. The data channel control device negotiates the application data channel with the terminal device.

Based on the method provided in the third aspect, the data channel control device may negotiate the bootstrap data channel and the application data channel with the terminal device, so that the additional communication information can be transmitted through the application data channel. In addition, the data channel control device may provide a data channel negotiation service. Therefore, for a plurality of services including the call value-added service, the data channel control device may establish one bootstrap data channel to transmit an application corresponding to each service, which prevents a control device corresponding to each service from negotiating a bootstrap data channel separately to deliver an application of the service, thereby reducing a delay, saving a data channel resource, and improving efficiency of data channel negotiation. In addition, in the method provided in the third aspect, a call value-added service control device does not need to perform data channel negotiation, thereby reducing costs of the call value-added service control device.

In a possible implementation, the bootstrap data channel is a data channel between a data channel media device and the terminal device. The application data channel is a data channel between the data channel media device and the terminal device.

Based on the foregoing possible implementation, the data channel control device may negotiate, with the terminal device, the bootstrap data channel between the data channel media device and the terminal device and the application data channel between the data channel media device and the terminal device.

In a possible implementation, before the data channel control device negotiates the application data channel with the terminal device, the method further includes: The data channel control device receives media parameter information of the call value-added service from a call value-added service control device.

Based on the foregoing possible implementation, the call value-added service control device may send the media parameter information of the call value-added service to the data channel control device, so that the data channel control device uses the media parameter information when negotiating the application data channel.

In a possible implementation, that the data channel control device negotiates the application data channel with the terminal device includes: The data channel control device sends first media information to the terminal device. The first media information includes the media parameter information and a parameter used to negotiate the application data channel. The data channel control device receives first response information from the terminal device. The first response information indicates whether the negotiation of the application data channel succeeds.

Based on the foregoing possible implementation, the data channel control device may negotiate the application data channel with the terminal device.

In a possible implementation, the method further includes: The data channel control device receives a call service identifier and an identifier of the terminal device from the call value-added service control device. The call service identifier includes all or a part of information of a session identifier of the call service.

Based on the foregoing possible implementation, the call value-added service control device may further send the call service identifier and the identifier of the terminal device to the data channel control device, so that the data channel control device finds the corresponding call service through matching based on the call service identifier, and determines, based on the identifier of the terminal device, to negotiate the application data channel with the terminal device.

In a possible implementation, the call service identifier is used by the data channel control device to determine to negotiate the application data channel for the call service. The identifier of the terminal device is used by the data channel control device to determine to negotiate the application data channel with the terminal device.

Based on the foregoing possible implementation, the data channel control device may find the corresponding call service through matching based on the call service identifier, and determine, based on the identifier of the terminal device, to negotiate the application data channel with the terminal device.

In a possible implementation, that the data channel control device receives media parameter information of the call value-added service from a call value-added service control device includes: The data channel control device receives a session initiation protocol SIP INFO message or a hypertext transfer protocol HTTP message from the call value-added service control device. The SIP INFO message or the HTTP message includes the media parameter information.

Based on the foregoing possible implementation, the media parameter information of the call value-added service may be carried in the SIP INFO message or the HTTP message.

In a possible implementation, the call value-added service is a ring back tone service, and the terminal device is a calling terminal device; or the call value-added service is a ring tone service, and the terminal device is a called terminal device.

Based on the foregoing possible implementation, if the call value-added service is the ring back tone service, the data channel control device negotiates the bootstrap data channel and the application data channel with the calling terminal device, so that additional communication information generated in response to an operation of a calling user can be transmitted through the application data channel. If the call value-added service is the ring tone service, the data channel control device negotiates the bootstrap data channel and the application data channel with the called terminal device, so that additional communication information generated in response to an operation of a called user can be transmitted through the application data channel.

In a possible implementation, before the data channel control device negotiates the bootstrap data channel with the terminal device in the call service, the method further includes: The data channel control device obtains user registration information of the call value-added service. The user registration information is used by the data channel control device to determine to negotiate the bootstrap data channel with the terminal device.

Based on the foregoing possible implementation, the data channel control device may determine, based on the user registration information, whether to negotiate the bootstrap data channel with the terminal device.

According to a fourth aspect, a communication method is provided. The method may be performed by a call value-added service control device, or may be performed by a module used in the call value-added service control device, for example, a chip, a chip system, or a circuit. This is not limited herein. For ease of description, the following uses an example in which the method is performed by the call value-added service control device for description. The method includes: The call value-added service control device determines media parameter information of a call value-added service. The media parameter information of the call value-added service includes a parameter related to negotiation of media content of the call value-added service. The call value-added service control device sends the media parameter information of the call value-added service to a data channel control device.

Based on the method provided in the fourth aspect, the call value-added service control device may send the media parameter information of the call value-added service to the data channel control device, so that the data channel control device uses the media parameter information when negotiating an application data channel.

In a possible implementation, that the call value-added service control device sends the media parameter information of the call value-added service to a data channel control device includes: The call value-added service control device sends a session initiation protocol SIP INFO message or a hypertext transfer protocol HTTP message to the data channel control device. The SIP INFO message or the HTTP message includes the media parameter information.

Based on the foregoing possible implementation, the media parameter information of the call value-added service may be carried in the SIP INFO message or the HTTP message.

In a possible implementation, the method further includes: The call value-added service control device sends a call service identifier and an identifier of a terminal device in a call service to the data channel control device. The call service identifier includes all or a part of information of a session identifier of the call service.

Based on the foregoing possible implementation, the call value-added service control device may further send the call service identifier and the identifier of the terminal device to the data channel control device, so that the data channel control device finds the corresponding call service through matching based on the call service identifier, and determines, based on the identifier of the terminal device, to negotiate the application data channel with the terminal device.

In a possible implementation, the call value-added service is a ring back tone service, and the terminal device is a calling terminal device.

Based on the foregoing possible implementation, if the call value-added service is the ring back tone service, the call value-added service control device sends an identifier of the calling terminal device to the data channel control device, so that the data channel control device determines to negotiate the application data channel with the calling terminal device.

In a possible implementation, that the call value-added service control device sends the media parameter information of the call value-added service to a data channel control device includes: The call value-added service control device sends the media parameter information of the call value-added service to the data channel control device after receiving a ringing message from a called terminal device.

Based on the foregoing possible implementation, after the called terminal device rings, the call value-added service control device can obtain the media parameter information, and send the media parameter information to the data channel control device.

In a possible implementation, the call value-added service is a ring tone service, and the terminal device is a called terminal device.

Based on the foregoing possible implementation, if the call value-added service is the ring tone service, the call value-added service control device sends an identifier of the called terminal device to the data channel control device, so that the data channel control device determines to negotiate the application data channel with the called terminal device.

In a possible implementation, that the call value-added service control device sends the media parameter information of the call value-added service to a data channel control device includes:
The call value-added service control device sends the media parameter information of the call value-added service to the data channel control device after receiving a ringing message from the terminal device.

Based on the foregoing possible implementation, after the called terminal device rings, the call value-added service control device can obtain the media parameter information, and send the media parameter information to the data channel control device.

According to a fifth aspect, a communication apparatus is provided, configured to implement the foregoing method. The communication apparatus may be the data channel control device in the first aspect, or an apparatus including the data channel control device. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In a possible implementation, the communication apparatus may include a processing module and a transceiver module. The processing module may be configured to implement a processing function in any one of the first aspect and the possible implementations of the first aspect. The processing module may be, for example, a processor. The transceiver module may also be referred to as a transceiver unit, and is configured to implement receiving and sending functions in any one of the first aspect and the possible implementations of the first aspect. The transceiver module may include a transceiver circuit, a transceiver machine, a transceiver, or a communication interface.

In a possible implementation, the transceiver module includes a sending module and a receiving module, respectively configured to implement sending and receiving functions in any one of the first aspect and the possible implementations of the first aspect.

In a possible implementation, the processing module is configured to negotiate a bootstrap data channel with a terminal device in a call service. The bootstrap data channel is used to transmit an additional application, the additional application is configured to transmit additional communication information through an application data channel, and the additional communication information is communication information generated by the additional application in response to an operation performed by a user on media content of a call value-added service provided on the terminal device. The transceiver module is configured to send indication information to a call value-added service control device. The indication information indicates the call value-added service control device to complete negotiation of the application data channel with the terminal device.

In a possible implementation, the bootstrap data channel is a data channel between a data channel media device and the terminal device. The application data channel is a data channel between the data channel media device and the terminal device, or the application data channel is a data channel between a call value-added service media device and the terminal device.

In a possible implementation, the indication information includes a call service identifier and an identifier of the terminal device, and the call service identifier includes all or a part of information of a session identifier of the call service.

In a possible implementation, the transceiver module is specifically configured to send a session initiation protocol SIP INFO message or a hypertext transfer protocol HTTP message to the call value-added service control device. The SIP INFO message or the HTTP message includes the indication information.

In a possible implementation, the call value-added service is a ring back tone service, and the terminal device is a calling terminal device; or the call value-added service is a ring tone service, and the terminal device is a called terminal device.

In a possible implementation, the processing module is further configured to obtain user registration information of the call value-added service. The user registration information is used by the communication apparatus to determine to negotiate the bootstrap data channel with the terminal device.

According to a sixth aspect, a communication apparatus is provided, configured to implement the foregoing method. The communication apparatus may be the call value-added service control device in the second aspect, or an apparatus including the call value-added service control device. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In a possible implementation, the communication apparatus may include a processing module and a transceiver module. The processing module may be configured to implement a processing function in any one of the second aspect and the possible implementations of the second aspect. The processing module may be, for example, a processor. The transceiver module may also be referred to as a transceiver unit, and is configured to implement a sending function and/or a receiving function in any one of the second aspect and the possible implementations of the second aspect. The transceiver module may include a transceiver circuit, a transceiver machine, a transceiver, or a communication interface.

In a possible implementation, the transceiver module includes a sending module and a receiving module, respectively configured to implement sending and receiving functions in any one of the second aspect and the possible implementations of the second aspect.

In a possible implementation, the transceiver module is configured to receive indication information from a data channel control device. The indication information indicates the call value-added control device to complete negotiation of an application data channel with a terminal device in a call service, the application data channel is used to transmit additional communication information, and the additional communication information is communication information generated by an additional application in response to an operation performed by a user on media content of a call value-added service provided on the terminal device. The processing module is configured to negotiate the application data channel with the terminal device.

In a possible implementation, the bootstrap data channel is a data channel between a data channel media device and the terminal device. The application data channel is a data channel between the data channel media device and the terminal device, or the application data channel is a data channel between a call value-added service media device and the terminal device.

In a possible implementation, the indication information includes a call service identifier and an identifier of the terminal device, and the call service identifier includes all or a part of information of a session identifier of the call service.

In a possible implementation, the call service identifier is used by the communication apparatus to determine to negotiate the application data channel for the call service. The identifier of the terminal device is used by the communication apparatus to determine to negotiate the application data channel with the terminal device.

In a possible implementation, the transceiver module is specifically configured to receive a session initiation protocol SIP INFO message or a hypertext transfer protocol HTTP message from the data channel control device. The SIP INFO message or the HTTP message includes the indication information.

In a possible implementation, the call value-added service is a ring back tone service, and the terminal device is a calling terminal device.

In a possible implementation, the processing module is specifically configured to negotiate the application data channel with the terminal device after receiving a ringing message from a called terminal device via the transceiver module.

In a possible implementation, the call value-added service is a ring tone service, and the terminal device is a called terminal device.

In a possible implementation, the processing module is specifically configured to negotiate the application data channel with the terminal device after receiving a ringing message from the terminal device via the transceiver module.

According to a seventh aspect, a communication apparatus is provided, configured to implement the foregoing method. The communication apparatus may be the data channel control device in the third aspect, or an apparatus including the data channel control device. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In a possible implementation, the communication apparatus may include a processing module. The processing module may be configured to implement a processing function in any one of the third aspect and the possible implementations of the third aspect. The processing module may be, for example, a processor.

In a possible implementation, the communication apparatus further includes a transceiver module. The transceiver module may also be referred to as a transceiver unit, and is configured to implement a sending function and/or a receiving function in any one of the third aspect and the possible implementations of the third aspect. The transceiver module may include a transceiver circuit, a transceiver machine, a transceiver, or a communication interface.

In a possible implementation, the transceiver module includes a sending module and a receiving module, respectively configured to implement sending and receiving functions in any one of the third aspect and the possible implementations of the third aspect.

In a possible implementation, the processing module is configured to negotiate a bootstrap data channel with a terminal device in a call service. The bootstrap data channel is used to transmit an additional application, the additional application is configured to transmit additional communication information through an application data channel, and the additional communication information is communication information generated by the additional application in response to an operation performed by a user on media content of a call value-added service provided on the terminal device. The processing module is further configured to negotiate the application data channel with the terminal device.

In a possible implementation, the bootstrap data channel is a data channel between a data channel media device and the terminal device. The application data channel is a data channel between the data channel media device and the terminal device.

In a possible implementation, the transceiver module is configured to receive media parameter information of the call value-added service from a call value-added service control device.

In a possible implementation, the processing module is specifically configured to send first media information to the terminal device via the transceiver module. The first media information includes the media parameter information and a parameter used to negotiate the application data channel. The processing module is further specifically configured to receive first response information from the terminal device via the transceiver module. The first response information indicates whether the negotiation of the application data channel succeeds.

In a possible implementation, the transceiver module is further configured to receive a call service identifier and an identifier of the terminal device from the call value-added service control device. The call service identifier includes all or a part of information of a session identifier of the call service.

In a possible implementation, the call service identifier is used by the communication apparatus to determine to negotiate the application data channel for the call service. The identifier of the terminal device is used by the communication apparatus to determine to negotiate the application data channel with the terminal device.

In a possible implementation, the transceiver module is specifically configured to receive a session initiation protocol SIP INFO message or a hypertext transfer protocol HTTP message from the call value-added service control device. The SIP INFO message or the HTTP message includes the media parameter information.

In a possible implementation, the call value-added service is a ring back tone service, and the terminal device is a calling terminal device; or the call value-added service is a ring tone service, and the terminal device is a called terminal device.

In a possible implementation, the processing module is further configured to obtain user registration information of the call value-added service. The user registration information is used by the communication apparatus to determine to negotiate the bootstrap data channel with the terminal device.

According to an eighth aspect, a communication apparatus is provided, configured to implement the foregoing method. The communication apparatus may be the call value-added service control device in the fourth aspect, or an apparatus including the call value-added service control device. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In a possible implementation, the communication apparatus may include a processing module and a transceiver module. The processing module may be configured to implement a processing function in any one of the fourth aspect and the possible implementations of the fourth aspect. The processing module may be, for example, a processor. The transceiver module may also be referred to as a transceiver unit, and is configured to implement a sending function and/or a receiving function in any one of the fourth aspect and the possible implementations of the fourth aspect. The transceiver module may include a transceiver circuit, a transceiver machine, a transceiver, or a communication interface.

In a possible implementation, the transceiver module includes a sending module and a receiving module, respectively configured to implement sending and receiving functions in any one of the fourth aspect and the possible implementations of the fourth aspect.

In a possible implementation, the processing module is configured to determine media parameter information of a call value-added service. The media parameter information of the call value-added service includes a parameter related to negotiation of media content of the call value-added service. The transceiver module is configured to send the media parameter information of the call value-added service to a data channel control device.

In a possible implementation, the transceiver module is specifically configured to send a session initiation protocol SIP INFO message or a hypertext transfer protocol HTTP message to the data channel control device. The SIP INFO message or the HTTP message includes the media parameter information.

In a possible implementation, the transceiver module is further configured to send a call service identifier and an identifier of a terminal device in a call service to the data channel control device. The call service identifier includes all or a part of information of a session identifier of the call service.

In a possible implementation, the call value-added service is a ring back tone service, and the terminal device is a calling terminal device.

In a possible implementation, the transceiver module is specifically configured to send the media parameter information to the data channel control device after receiving a ringing message from a called terminal device.

In a possible implementation, the call value-added service is a ring tone service, and the terminal device is a called terminal device.

In a possible implementation, the transceiver module is specifically configured to send the media parameter information to the data channel control device after receiving a ringing message from the terminal device.

According to a ninth aspect, a communication apparatus is provided, including a processor. The processor is configured to be coupled to a memory, and after reading instructions in the memory, perform, according to the instructions, the method according to any one of the foregoing aspects. The communication apparatus may be the data channel control device in the first aspect or the third aspect, or an apparatus including the data channel control device. The communication apparatus may be the call value-added service control device in the second aspect or the fourth aspect, or an apparatus including the call value-added service control device.

With reference to the ninth aspect, in a possible implementation, the communication apparatus further includes the memory. The memory is configured to store necessary program instructions and data.

With reference to the ninth aspect, in a possible implementation, the communication apparatus is a chip or a chip system. Optionally, when the communication apparatus is a chip system, the communication apparatus may include a chip, or may include a chip and another discrete component.

According to a tenth aspect, a communication apparatus is provided, including a processor and an interface circuit. The interface circuit is configured to receive a computer program or instructions, and transmit the computer program or the instructions to the processor. The processor is configured to execute the computer program or the instructions, to enable the communication apparatus to perform the method according to any one of the foregoing aspects.

With reference to the tenth aspect, in a possible implementation, the communication apparatus is a chip or a chip system. Optionally, when the communication apparatus is a chip system, the communication apparatus may include a chip, or may include a chip and another discrete component.

According to an eleventh aspect, a computer-readable storage medium is provided. The computer-readable storage medium stores instructions. When the instructions are run on a computer, the computer is enabled to perform the method according to any one of the foregoing aspects.

According to a twelfth aspect, a computer program product including instructions is provided. When the instructions are run on a computer, the computer is enabled to perform the method according to any one of the foregoing aspects.

According to a thirteenth aspect, a communication system is provided. The communication system includes a data channel control device configured to perform the method according to the first aspect, and a call value-added service control device configured to perform the method according to the second aspect.

According to a fourteenth aspect, a communication system is provided. The communication system includes a data channel control device configured to perform the method according to the third aspect, and a call value-added service control device configured to perform the method according to the fourth aspect.

According to a fifteenth aspect, a communication method is provided. The method may be performed by a data channel control device/call value-added service control device, or may be performed by a module used in the data channel control device/call value-added service control device, for example, a chip, a chip system, or a circuit. This is not limited herein. For ease of description, the following uses an example in which the method is performed by the data channel control device and the call value-added service control device for description. The method includes:
The data channel control device negotiates a bootstrap data channel with a terminal device in a call service. The bootstrap data channel is used to transmit an additional application, the additional application is configured to transmit additional communication information through an application data channel, and the additional communication information is communication information generated by the additional application in response to an operation performed by a user on media content of a call value-added service provided on the terminal device. The data channel control device sends indication information to the call value-added service control device. The indication information indicates the call value-added service control device to complete negotiation of the application data channel with the terminal device. The call value-added service control device receives the indication information from the data channel control device. The call value-added service control device negotiates the application data channel with the terminal device.

In a possible implementation, the bootstrap data channel is a data channel between a data channel media device and the terminal device. The application data channel is a data channel between the data channel media device and the terminal device, or the application data channel is a data channel between a call value-added service media device and the terminal device.

In a possible implementation, the indication information includes a call service identifier and an identifier of the terminal device, and the call service identifier includes all or a part of information of a session identifier of the call service.

In a possible implementation, that the data channel control device sends indication information to the call value-added service control device includes: The data channel control device sends a session initiation protocol SIP INFO message or a hypertext transfer protocol HTTP message to the call value-added service control device. The SIP INFO message or the HTTP message includes the indication information.

In a possible implementation, the call value-added service is a ring back tone service, and the terminal device is a calling terminal device.

In a possible implementation, that the call value-added service control device negotiates the application data channel with the terminal device includes: The call value-added service control device negotiates the application data channel with the terminal device after receiving a ringing message from a called terminal device.

In a possible implementation, the call value-added service is a ring tone service, and the terminal device is a called terminal device.

In a possible implementation, that the call value-added service control device negotiates the application data channel with the terminal device includes: The call value-added service control device negotiates the application data channel with the terminal device after receiving a ringing message from the terminal device.

In a possible implementation, before the data channel control device negotiates the bootstrap data channel with the terminal device in the call service, the method further includes: The data channel control device obtains user registration information of the call value-added service. The user registration information is used by the data channel control device to determine to negotiate the bootstrap data channel with the terminal device.

In a possible implementation, the call value-added service control device is a ring back tone service application server and/or a ring tone service application server.

According to a sixteenth aspect, a communication method is provided. The method may be performed by a data channel control device/call value-added service control device, or may be performed by a module used in the data channel control device/call value-added service control device, for example, a chip, a chip system, or a circuit. This is not limited herein. For ease of description, the following uses an example in which the method is performed by the data channel control device and the call value-added service control device for description. The method includes: The data channel control device negotiates a bootstrap data channel with a terminal device in a call service. The bootstrap data channel is used to transmit an additional application, the additional application is configured to transmit additional communication information through an application data channel, and the additional communication information is communication information generated by the additional application in response to an operation performed by a user on media content of a call value-added service provided on the terminal device. The data channel control device negotiates the application data channel with the terminal device.

In a possible implementation, the bootstrap data channel is a data channel between a data channel media device and the terminal device. The application data channel is a data channel between the data channel media device and the terminal device.

In a possible implementation, before the data channel control device negotiates the application data channel with the terminal device, the method further includes:
The call value-added service control device sends media parameter information of the call value-added service to the data channel control device. The data channel control device receives the media parameter information of the call value-added service from the call value-added service control device.

In a possible implementation, that the data channel control device negotiates the application data channel with the terminal device includes: The data channel control device sends first media information to the terminal device. The first media information includes the media parameter information and a parameter used to negotiate the application data channel. The data channel control device receives first response information from the terminal device. The first response information indicates whether the negotiation of the application data channel succeeds.

In a possible implementation, the method further includes: The call value-added service control device sends a call service identifier and an identifier of the terminal device to the data channel control device. The data channel control device receives the call service identifier and the identifier of the terminal device from the call value-added service control device. The call service identifier includes all or a part of information of a session identifier of the call service.

In a possible implementation, the call service identifier is used by the data channel control device to determine to negotiate the application data channel for the call service. The identifier of the terminal device is used by the data channel control device to determine to negotiate the application data channel with the terminal device.

In a possible implementation, that the data channel control device receives the media parameter information of the call value-added service from the call value-added service control device includes: The data channel control device receives a session initiation protocol SIP INFO message or a hypertext transfer protocol HTTP message from the call value-added service control device. The SIP INFO message or the HTTP message includes the media parameter information.

In a possible implementation, the call value-added service is a ring back tone service, and the terminal device is a calling terminal device.

In a possible implementation, that the call value-added service control device sends media parameter information of the call value-added service to the data channel control device includes: The call value-added service control device sends the media parameter information of the call value-added service to the data channel control device after receiving a ringing message from a called terminal device.

In a possible implementation, the call value-added service is a ring tone service, and the terminal device is a called terminal device.

In a possible implementation, that the call value-added service control device sends media parameter information of the call value-added service to the data channel control device includes: The call value-added service control device sends the media parameter information of the call value-added service to the data channel control device after receiving a ringing message from the terminal device.

In a possible implementation, before the data channel control device negotiates the bootstrap data channel with the terminal device in the call service, the method further includes: The data channel control device obtains user registration information of the call value-added service. The user registration information is used by the data channel control device to determine to negotiate the bootstrap data channel with the terminal device.

In a possible implementation, the call value-added service control device is a ring back tone service application server and/or a ring tone service application server.

For technical effects brought by any one of the possible implementations in the fifth aspect to the sixteenth aspect, refer to technical effects brought by any one of the first aspect to the fourth aspect or different possible implementations in any one of the aspects. Details are not described herein again.

It may be understood that the solutions in the foregoing aspects may be combined on a premise that the solutions do not conflict.

### BRIEF DESCRIPTION OF DRAWINGS

FIG. 1 is a schematic flowchart 1 of a communication method according to an embodiment of this application;
FIG. 2A is a diagram of an architecture of a communication system according to an embodiment of this application;
FIG. 2B is a diagram of a network according to an embodiment of this application;
FIG. 3 is a diagram of a hardware structure of a communication apparatus according to an embodiment of this application;
FIG. 4 is a schematic flowchart 2 of a communication method according to an embodiment of this application;
FIG. 5 is a schematic flowchart 3 of a communication method according to an embodiment of this application;
FIG. 6 is a schematic flowchart 4 of a communication method according to an embodiment of this application;
FIG. 7 is a schematic flowchart 5 of a communication method according to an embodiment of this application;
FIG. 8 is a diagram 1 of a structure of a communication apparatus according to an embodiment of this application; and
FIG. 9 is a diagram 2 of a structure of a communication apparatus according to an embodiment of this application.

### DESCRIPTION OF EMBODIMENTS

Before embodiments of this application are described, related technical terms in embodiments of this application are explained. It may be understood that, the explanations are intended to facilitate understanding of embodiments of this application, but should not be construed as limiting the protection scope claimed in embodiments of this application.

### 1. Terminal device

The terminal device in embodiments of this application is a device having a wireless or wired communication capability. For example, the terminal device may be connected to a wireless access device via an air interface or a wired interface. From a perspective of a product form, the terminal device may include a handheld device, an in-vehicle device, a wearable device, a computing device, or the like having a communication function. For example, the terminal device may be a mobile phone (mobile phone), a tablet computer, a computer with a wireless communication function, a virtual reality (virtual reality, VR) terminal device, an augmented reality (augmented reality, AR) terminal device, a smartwatch, a smart band, smart glasses, a terminal device in an internet of things (internet of things, IoT) system, or a desktop computer. This is not limited. The terminal device in embodiments of this application may be user equipment (user equipment, UE) defined in a 3rd generation partnership project (3rd generation partnership project, 3GPP) standard specification.

### 2. Call service

The call service in embodiments of this application is a service in which a terminal device participating as a calling party or a called party is connected to one or more other terminal devices via a communication network to perform a voice call or a video call. The call service may cover an entire process from the start of dialing to the end of the call, or may cover a part of the process from the start of dialing to the end of the call, for example, a process from the start of dialing to when each party participating in the call service enters a call state. The call service may be a one-to-one call service, or may be a one-to-many (for example, a conference) call service. In embodiments of this application, the one-to-one call service is used as an example, but all related solutions may be applied to the one-to-many call service.

In embodiments of this application, if the terminal device participates in the call service as a calling party, the terminal device may be referred to as a calling terminal device. If the terminal device participates in the call service as a called party, the terminal device may be referred to as a called terminal device.

### 3. Call value-added service

The call value-added service in embodiments of this application may be a service of providing, in a call service, media content (for example, audio media content and/or video media content) for a terminal device that subscribes to the call value-added service, and supporting a user in performing an operation on the media content. In an example, the call value-added service includes a ring back tone service and/or a tone ring tone service. The ring back tone service is a service of providing media content for a calling terminal device after a called terminal device rings, so that a calling user enjoys audio and/or video experience during call waiting. The ring back tone service may also be referred to as a customized alerting tone (customized alerting tone, CAT) service. The ring tone service is a service of providing media content for a called terminal device after the called terminal device rings, so that a called user enjoys audio and/or video experience. The ring tone service may also be referred to as a customized ringing signal (customized ringing signal, CRS) service. It should be understood that the call value-added service may further include another type of service. This is not specifically limited in embodiments of this application.

It may be understood that, after the media content is delivered to the terminal device, the user corresponding to the terminal device may perform an operation on the media content. Specifically, after the media content is delivered to the terminal device, in addition to playing the media content, the terminal device further presents an operable button in an interface of the terminal device. The user corresponding to the terminal device interacts with a peer user and/or a related device (for example, the following data channel media device, call value-added service media device, or call value-added service interaction device) via the operable button.

For example, the operable button is a like button. After the user corresponding to the terminal device taps the button, another terminal device in the call service may present a corresponding animation special effect, and a related device may increase a quantity of user likes by 1.

For another example, the operable button is a follow button. After the user corresponding to the terminal device taps the button, a related device may subsequently push related media content to the terminal device.

For another example, the operable button is a download button. After the user corresponding to the terminal device taps the button, a related device sends, to the terminal device, a file of the media content that is just delivered to the terminal device.

### 4. Additional application

The additional application in embodiments of this application is also referred to as an additional application program, and may generate corresponding communication information in response to an operation performed by a user on media content of a call value-added service provided on a terminal device.

In an example, the additional application may be a program that uses a call application program (also referred to as a "dial" application) as a host application program, interpreted and executed by the call application program, and does not need to be installed in an operating system.

In an example, the additional application may be web (Web) content including a hypertext markup language (hypertext markup language, HTML), a JavaScript script, a picture, and a cascading style sheet (cascading style sheet, CSS), describes a graphical user interface (user interface, UI), and can implement interactive service logic.

The additional application is usually downloaded from a network side by the call application on the terminal device, runs during an IMS call, and does not need to be installed or uninstalled. It may be understood that the additional application may exist in a form of a web page, or may exist in a form of an applet/a quick application/a light application, or the like. This is not limited in this application.

### 5. Additional communication information

The additional communication information in embodiments of this application is communication information generated by an additional application in response to an operation performed by a user on media content of a call value-added service provided on a terminal device.

For example, if an operable button is a like button, after a user corresponding to the terminal device taps the button, the additional application generates, in response to the like operation of the user, additional communication information indicating the like operation of the user. Subsequently, the terminal device may send the additional communication information to a related device and/or another terminal device in a call service.

For another example, if the operable button is a follow button, after the user corresponding to the terminal device taps the button, the additional application generates, in response to the follow operation of the user, additional communication information indicating the follow operation of the user. Subsequently, the terminal device may send the additional communication information to a related device and/or another terminal device in the call service.

For another example, if the operable button is a download button, after the user corresponding to the terminal device taps the button, the additional application generates, in response to the download operation of the user, additional communication information indicating the download operation of the user. Subsequently, the terminal device may send the additional communication information to a related device.

In embodiments of this application, the additional communication information may be transmitted (sent or received) through a data channel and correspondingly processed (presented, controlled, or the like) by the additional application.

### 6. Data channel (data channel)

The data channel in embodiments of this application is also referred to as an IMS data channel (IMS data channel), that is, a data channel in an IMS. Data channels may be classified into a bootstrap data channel (bootstrap data channel) and an application data channel (application data channel) based on different purposes. Details are described as follows:
The bootstrap data channel is a data channel used to transmit an additional application program, and may also be referred to as an "underlying data channel", a "booting data channel", or an "initialized data channel". A data stream number of the bootstrap data channel is usually less than 1000. For example, the bootstrap data channel may be used to transmit an additional application.

The application data channel is a data channel used to transmit service data (such as additional communication information, and/or audio and/or video media content) of the additional application, may also be referred to as "another data channel" (another data channel) or an "additional data channel" (additional data channel), and may be used by a data channel application program (data channel application). A data stream number of the application data channel is generally greater than or equal to 1000.

It may be understood that the names of the data channels in this application are merely intended for differentiation rather than limitation.

In embodiments of this application, the data channel may be established through negotiation. Specifically, two devices (for example, a data channel control device and a terminal device, or a call value-added service control device and a terminal device in the following embodiments) may obtain, through negotiation, parameters used to establish a data channel. The negotiation herein means that the two devices exchange the parameters used to establish the data channel, that is, through negotiation, both parties know information about media resources used by each other, for example, information such as port numbers and bandwidths.

It can be learned from the foregoing descriptions that, to enrich user experience, a call value-added service is required to support user interaction, that is, a user may perform an operation on media content provided by the call value-added service to a terminal device, and the terminal device may generate additional communication information in response to the operation of the user, and send the additional communication information to a related device and/or another terminal device in a call service, so that the device that receives the additional communication information performs a corresponding operation. However, a current method of negotiating media content based on a SIP INFO (session initiation protocol information) message for the call value-added service has poor scalability, which makes it difficult to transmit the additional communication information.

At present, the IMS data channel technology has been introduced into standards such as 3GPP. For example, a multimedia telephony (multimedia telephony, MMTel) application server (application server, AS) may implement negotiation and establishment of a data channel for a calling terminal device and a called terminal device in a call negotiation phase, and perform, after the called terminal device rings, multimedia calling line identification presentation based on the data channel established through negotiation. Therefore, to resolve the foregoing problem, a communication method is provided, to transmit additional communication information based on a data channel.

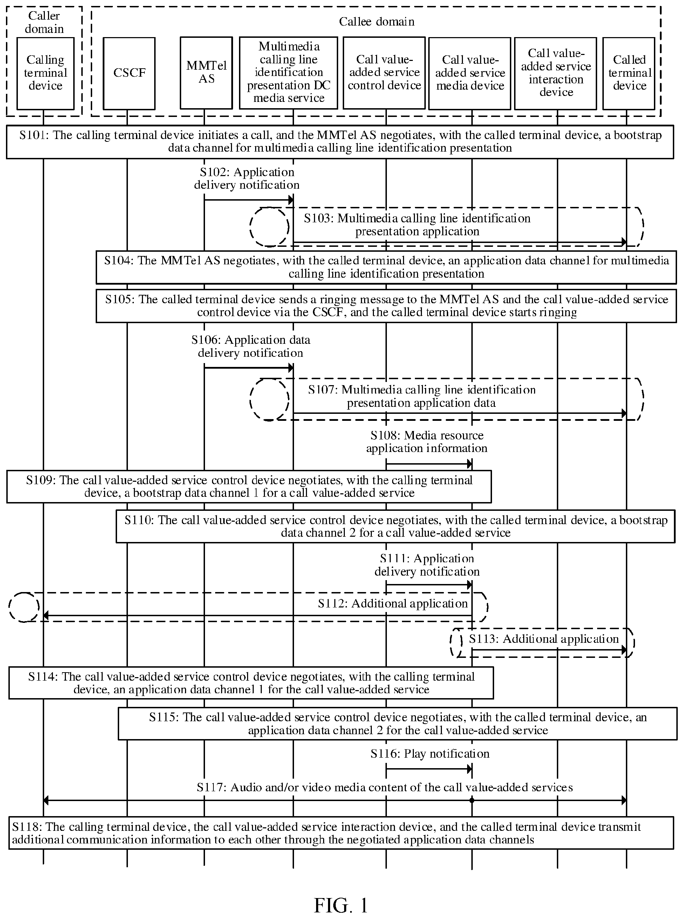

FIG. 1 shows a communication method. The method is described by using an example in which a call value-added service is added in a scenario of a multimedia calling line identification presentation service based on a data channel. The communication method includes the following steps.

S101: A calling terminal device initiates a call, and an MMTel AS negotiates, with a called terminal device, a bootstrap data channel for multimedia calling line identification presentation.

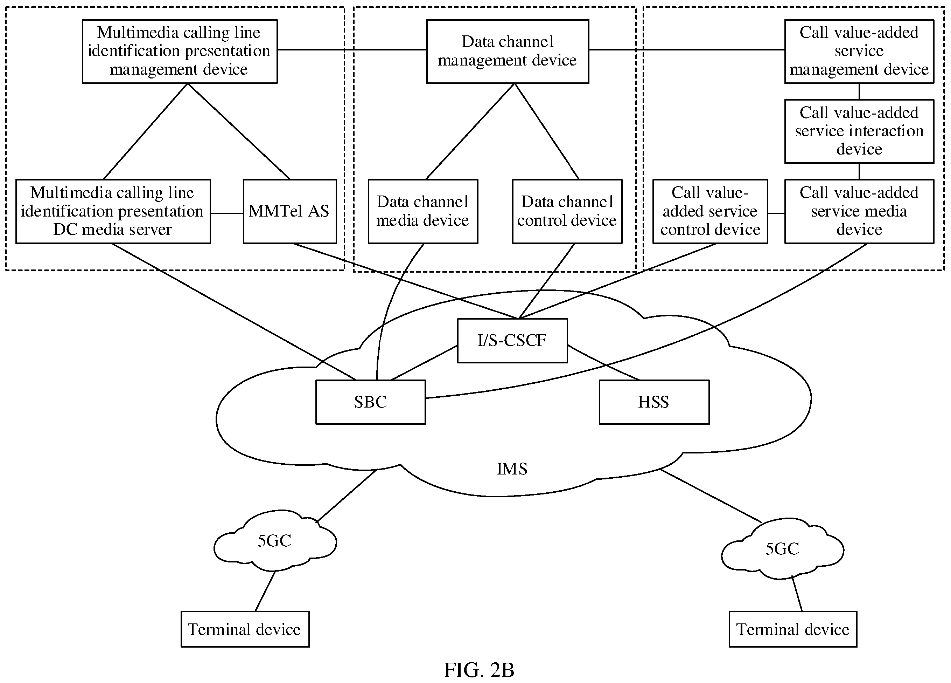

The calling terminal device may be one terminal device in FIG. 2B, and the called terminal device may be the other terminal device in FIG. 2B. The MMTel AS may be an MMTel AS in FIG. 2B. The bootstrap data channel for multimedia calling line identification presentation is a data channel between a multimedia calling line identification presentation DC media server and the called terminal device. The multimedia calling line identification presentation DC media server may be a multimedia calling line identification presentation DC media server in FIG. 2B.

A specific process of S101 is as follows: The calling terminal device sends an invite request (Invite) message 1. The invite request message 1 is routed to the MMTel AS via a call server control function (call server control function, CSCF). The invite request message 1 may carry a session description protocol (session description protocol, SDP) parameter of a call service, and the SDP parameter includes a parameter used to negotiate media content of a voice call service, to indicate to perform the voice call service. Then, the MMTel AS sends media resource reservation notification information to the multimedia calling line identification presentation DC media server, to notify the multimedia calling line identification presentation DC media server to reserve a media resource. The MMTel AS further sends an invite request message 2. The invite request message 2 is routed to the called terminal device via the CSCF. The invite request message 2 carries the parameter used to negotiate the media content of the voice call service and a parameter used to negotiate the bootstrap data channel for multimedia calling line identification presentation. After receiving the invite request message 2, the called terminal device sends a 183 message. The 183 message is routed to the MMTel AS via the CSCF. The 183 message carries the parameter used to negotiate the media content of the voice call service and the parameter used to negotiate the bootstrap data channel for multimedia calling line identification presentation. After receiving the 183 message, the MMTel AS deletes, from the 183 message, the parameter used to negotiate the bootstrap data channel for multimedia calling line identification presentation, and sends, to the calling terminal device, the 183 message from which the parameter is deleted. After receiving the 183 message from which the parameter is deleted, the calling terminal device sends a PRACK message to the MMTel AS via the CSCF in response to the 183 message sent by the MMTel AS. After receiving the PRACK message, the MMTel AS sends the PRACK message to the called terminal device via the CSCF in response to the 183 message sent by the called terminal device. After receiving the PRACK message, the called terminal device sends a 200 message to the MMTel AS via the CSCF in response to the PRACK message sent by the MMTel AS. After receiving the 200 message, the MMTel AS sends the 200 message to the calling terminal device via the CSCF in response to the PRACK message sent by the calling terminal device.

After receiving the 200 message, the calling terminal device may further send an update (update) message to the MMTel AS via the CSCF. The update message may carry an updated SDP parameter. After receiving the update message, the MMTel AS adds, to the update message, an updated parameter used to negotiate the bootstrap data channel for multimedia calling line identification presentation, and sends the update message to the called terminal device via the CSCF. After receiving the update message, the called terminal device sends a 200 message to the MMTel AS via the CSCF. After receiving the 200 message, the MMTel AS sends the 200 message to the calling terminal device via the CSCF. So far, the negotiation (or establishment) of the bootstrap data channel for multimedia calling line identification presentation is completed.

S102: The MMTel AS sends an application delivery notification to the multimedia calling line identification presentation DC media server. Correspondingly, the multimedia calling line identification presentation DC media server receives the application delivery notification from the MMTel AS.

The application delivery notification may be used to notify the multimedia calling line identification presentation DC media server to send a multimedia calling line identification presentation application to the called terminal device.

S103: The multimedia calling line identification presentation DC media server sends the multimedia calling line identification presentation application to the called terminal device through the negotiated bootstrap data channel. Correspondingly, the called terminal device receives the multimedia calling line identification presentation application from the multimedia calling line identification presentation DC media server through the negotiated bootstrap data channel.

It may be understood that after receiving the application, the called terminal device may load and run the application.

S104: The MMTel AS negotiates, with the called terminal device, an application data channel for multimedia calling line identification presentation.

The application data channel for multimedia calling line identification presentation is a data channel between the multimedia calling line identification presentation DC media server and the called terminal device.

A specific process of S104 is as follows: The called terminal device sends an update message to the MMTel AS via the CSCF. The update message carries the parameter used to negotiate the media content of the voice call service, the parameter used to negotiate the bootstrap data channel for multimedia calling line identification presentation, and a parameter used to negotiate the application data channel for multimedia calling line identification presentation. After receiving the update message, the MMTel AS sends a 200 message to the called terminal device via the CSCF. The 200 message carries the parameter used to negotiate the media content of the voice call service, the parameter used to negotiate the bootstrap data channel for multimedia calling line identification presentation, and the parameter used to negotiate the application data channel for multimedia calling line identification presentation in response to the update message of the called terminal device. So far, the negotiation (or establishment) of the application data channel for multimedia calling line identification presentation is completed.

S105: The called terminal device sends a ringing (180) message to the MMTel AS and a call value-added service control device via the CSCF, and the called terminal device starts ringing. Correspondingly, the MMTel AS and the call value-added service control device receive the ringing message from the called terminal device.

The call value-added service control device may be a call value-added service control device in FIG. 2B.

S106: The MMTel AS sends an application data delivery notification to the multimedia calling line identification presentation DC media server. Correspondingly, the multimedia calling line identification presentation DC media server receives the application data delivery notification from the MMTel AS.

The application data delivery notification may be used to notify the multimedia calling line identification presentation DC media server to send multimedia calling line identification presentation application data to the called terminal device.

S107: The multimedia calling line identification presentation DC media server sends the multimedia calling line identification presentation application data to the called terminal device through the negotiated application data channel. Correspondingly, the called terminal device receives the multimedia calling line identification presentation application data from the multimedia calling line identification presentation DC media server through the negotiated application data channel.

It may be understood that, after receiving the data, the called terminal device may load the data by using the multimedia calling line identification presentation application and display information carried in the data, for example, display information such as an identifier of the calling terminal device in an interface of the called terminal device.

S108: The call value-added service control device sends media resource application information to a call value-added service media device. Correspondingly, the call value-added service media device receives the media resource application information from the call value-added service control device.

The call value-added service media device may be a call value-added service media device in FIG. 2B. The media resource application information may be used to apply to the call value-added service media device for a media resource.

S109: The call value-added service control device negotiates, with the calling terminal device, a bootstrap data channel 1 for a call value-added service.

The bootstrap data channel 1 is a data channel between the call value-added service media device and the calling terminal device.

A specific process of S109 is as follows: The call value-added service control device sends an update message to the calling terminal device via the CSCF. The update message may carry a parameter 1 used to negotiate media content of the call value-added service and a parameter used to negotiate the bootstrap data channel 1. After receiving the update message, the calling terminal device sends a 200 message to the call value-added service control device via the CSCF. The 200 message may carry the parameter 1 used to negotiate the media content of the call value-added service and the parameter used to negotiate the bootstrap data channel 1. So far, the negotiation (or establishment) of the bootstrap data channel 1 is completed.

S110: The call value-added service control device negotiates, with the called terminal device, a bootstrap data channel 2 for a call value-added service.

The bootstrap data channel 2 is a data channel between the call value-added service media device and the called terminal device.

A specific process of S110 is as follows: The call value-added service control device sends an update message to the called terminal device via the CSCF. The update message may carry a parameter 2 used to negotiate media content of the call value-added service and a parameter used to negotiate the bootstrap data channel 2. After receiving the update message, the called terminal device sends a 200 message to the call value-added service control device via the CSCF. The 200 message may carry the parameter 2 used to negotiate the media content of the call value-added service and the parameter used to negotiate the bootstrap data channel 2. So far, the negotiation (or establishment) of the bootstrap data channel 2 is completed.

It may be understood that, in S109 and S110, the call value-added service control device performs bootstrap data channel negotiation with both the calling terminal device and the called terminal device. In a specific application, the call value-added service control device may alternatively perform bootstrap data channel negotiation with one terminal device in the call service. For example, the call value-added service control device performs bootstrap data channel negotiation with the calling terminal device or the called terminal device.

It may be understood that, if the call value-added service control device performs bootstrap data channel negotiation with the calling terminal device, but does not perform bootstrap data channel negotiation with the called terminal device, in S110, the update message and the 200 message do not carry the parameter used to negotiate the bootstrap data channel 2. If the call value-added service control device performs bootstrap data channel negotiation with the called terminal device, but does not perform bootstrap data channel negotiation with the calling terminal device, in S109, the update message and the 200 message do not carry the parameter used to negotiate the bootstrap data channel 1.

It may be understood that, after S110, the call value-added service control device may further send the ringing message to the calling terminal device via the CSCF, so that a user corresponding to the calling terminal device determines that the called terminal device is ringing. Alternatively, the ringing message may be sent by the call value-added service control device to the calling terminal device via the CSCF after S115.

S111: The call value-added service control device sends an application delivery notification to the call value-added service media device. Correspondingly, the call value-added service media device receives the application delivery notification from the call value-added service control device.

The application data delivery notification may be used to notify the call value-added service media device to send corresponding additional applications to the calling terminal device and the called terminal device respectively.

S112: The call value-added service media device sends an additional application to the calling terminal device through the bootstrap data channel 1. Correspondingly, the calling terminal device receives the additional application from the call value-added service media device through the bootstrap data channel 1.

It may be understood that, after receiving the additional application, the calling terminal device may load and run the additional application.

S113: The call value-added service media device sends an additional application to the called terminal device through the bootstrap data channel 2. Correspondingly, the called terminal device receives the additional application from the call value-added service media device through the bootstrap data channel 2.

It may be understood that, after receiving the additional application, the called terminal device may load and run the additional application.

S114: The call value-added service control device negotiates, with the calling terminal device, an application data channel 1 for the call value-added service.

The application data channel 1 is a data channel between the call value-added service media device and the calling terminal device.

A specific process of S114 is as follows: The call value-added service control device sends an update message to the calling terminal device via the CSCF. The update message may carry the parameter 1 used to negotiate the media content of the call value-added service, the parameter used to negotiate the bootstrap data channel 1, and a parameter used to negotiate the application data channel 1. After receiving the update message, the calling terminal device sends a 200 message to the call value-added service control device via the CSCF. The 200 message may carry the parameter 1 used to negotiate the media content of the call value-added service, the parameter used to negotiate the bootstrap data channel 1, and the parameter used to negotiate the application data channel 1. So far, the negotiation (or establishment) of the application data channel 1 is completed.

S115: The call value-added service control device negotiates, with the called terminal device, an application data channel 2 for the call value-added service.

The application data channel 2 is a data channel between the call value-added service media device and the called terminal device.

A specific process of S115 is as follows: The call value-added service control device sends an update message to the called terminal device via the CSCF. The update message may carry the parameter 2 used to negotiate the media content of the call value-added service, the parameter used to negotiate the bootstrap data channel 2, and a parameter used to negotiate the application data channel. After receiving the update message, the called terminal device sends a 200 message to the call value-added service control device via the CSCF. The 200 message may carry the parameter 2 used to negotiate the media content of the call value-added service, the parameter used to negotiate the bootstrap data channel 2, and the parameter used to negotiate the application data channel 2. So far, the negotiation (or establishment) of the application data channel 2 is completed.

It may be understood that, in S114 and S115, the call value-added service control device performs application data channel negotiation with both the calling terminal device and the called terminal device. In a specific application, the call value-added service control device may alternatively perform application data channel negotiation with one terminal device in the call service. For example, the call value-added service control device performs application data channel negotiation with the calling terminal device or the called terminal device.

It may be understood that, if the call value-added service control device performs application data channel negotiation with the calling terminal device, but does not perform application data channel negotiation with the called terminal device, in S115, the update message and the 200 message do not carry the parameter used to negotiate the application data channel 2. If the call value-added service control device performs application data channel negotiation with the called terminal device, but does not perform application data channel negotiation with the calling terminal device, in S114, the update message and the 200 message do not carry the parameter used to negotiate the application data channel 1.

S116: The call value-added service control device sends a play notification to the call value-added service media device. Correspondingly, the call value-added service media device receives the play notification from the call value-added service control device.

The play notification may be used to notify the call value-added service media device to play audio and/or video media content of the call value-added services on the calling terminal device and the called terminal device respectively.

S117: The call value-added service media device delivers the audio and/or video media content of the call value-added services to the calling terminal device and the called terminal device respectively.

S118: The calling terminal device, a call value-added service interaction device, and the called terminal device transmit additional communication information to each other through the negotiated application data channels.

For example, in response to an operation performed by the user corresponding to the calling terminal device on the media content of the call value-added service provided on the calling terminal device, the additional application loaded on the calling terminal device may generate additional communication information, and send the additional communication information to the call value-added service media device through the application data channel 1. After receiving the additional communication information, the call value-added service media device may send the additional communication information to the call value-added service interaction device. After receiving the additional communication information, the call value-added service interaction device processes the additional communication information. For example, if the user taps a like button, the call value-added service interaction device increases, by 1, a quantity of persons liking the media content delivered to the calling terminal device. If the user taps a follow button, the call value-added service interaction device increases, by 1, a quantity of persons following the media content delivered to the calling terminal device, and pushes corresponding media content to the calling terminal device after the current call service ends. If the user taps a download button, the call value-added service interaction device sends a file of the delivered media content to the calling terminal device. The call value-added service interaction device may further send processed additional communication information to the call value-added service media device. After receiving the processed additional communication information, the call value-added service media device may further send the processed additional communication information to the called terminal device through the application data channel 2, so that the called terminal device performs a corresponding operation, for example, presenting a corresponding animation special effect on the called terminal device.

Similarly, in response to an operation performed by a user corresponding to the called terminal device on the media content of the call value-added service provided on the called terminal device, the additional application loaded on the called terminal device may generate additional communication information, and send the additional communication information to the call value-added service media device through the application data channel 2. After receiving the additional communication information, the call value-added service media device may send the additional communication information to the call value-added service interaction device. After receiving the additional communication information, the call value-added service interaction device processes the additional communication information, and sends processed additional communication information to the call value-added service media device. After receiving the processed additional communication information, the call value-added service media device may further send the processed additional communication information to the calling terminal device through the application data channel 1, so that the calling terminal device performs a corresponding operation.

The call value-added service interaction device in S118 may be a call value-added service interaction device in FIG. 2B.

Based on the method shown in FIG. 1, the call value-added service control device may negotiate the bootstrap data channel and the application data channel with the calling terminal device and/or the called terminal device after receiving the ringing message. The calling terminal device and/or the called terminal device may receive the additional application through the bootstrap data channel, and transmit, through the application data channel, the additional communication information generated by the additional application, to improve user experience.

In the method shown in FIG. 1, data channels need to be established for both the multimedia calling line identification presentation service and the call value-added service. However, because different devices are used for the two services to perform data channel negotiation with the terminal device (a device used for the multimedia calling line identification presentation service to perform data channel negotiation with the terminal device is the MMTel AS, while a device used for the call value-added service to perform data channel negotiation with the terminal device is the call value-added service control device), data channel negotiation with the terminal device is performed for the two services separately. Therefore, the method shown in FIG. 1 has many redundant steps. For example, the called terminal device performs bootstrap data channel negotiation in both S101 and S110, that is, the called terminal device repeatedly performs bootstrap data channel negotiation, which increases a delay, and wastes a data channel resource. Therefore, in the method shown in FIG. 1, efficiency of data channel negotiation is low.

To resolve the foregoing problem, embodiments of this application provide the following two communication methods.

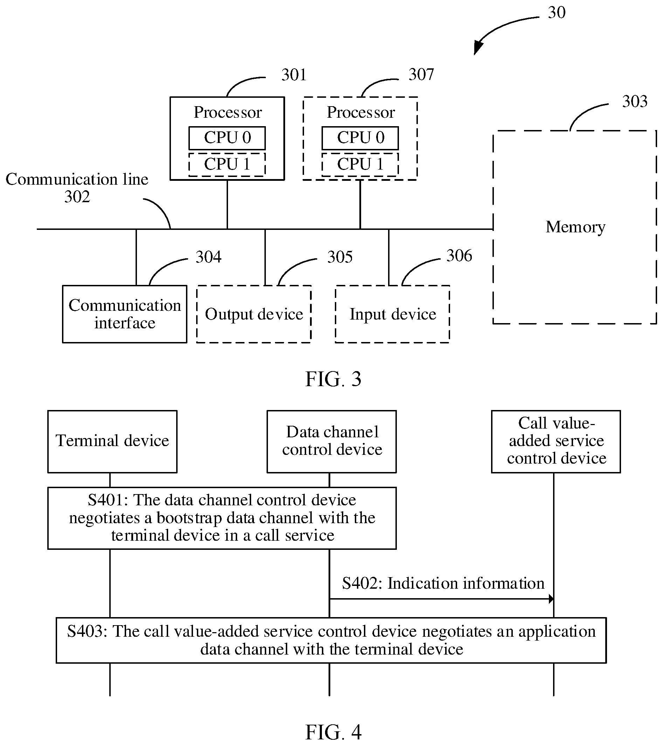

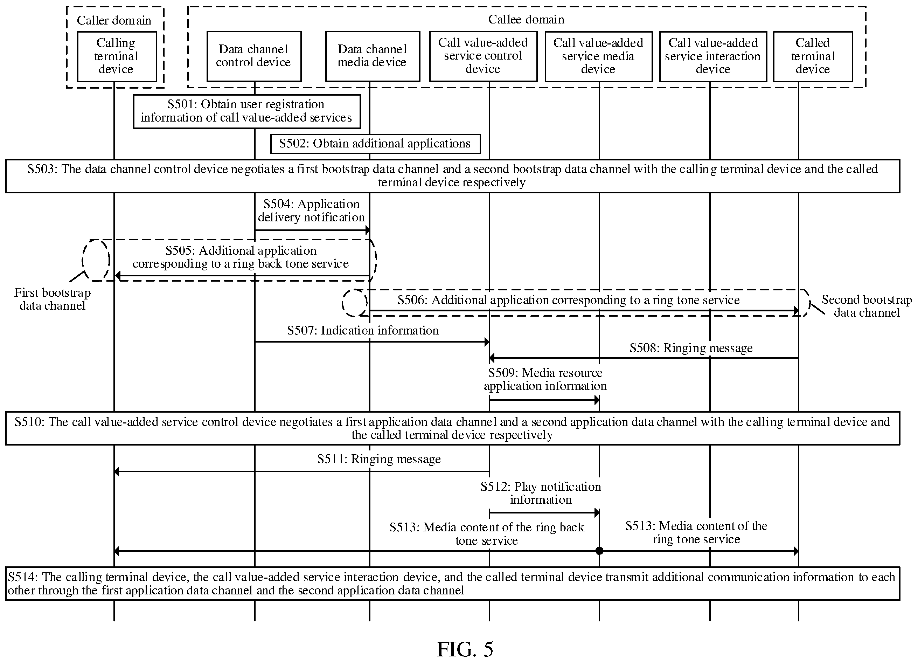

Method 1: A data channel control device may negotiate a bootstrap data channel with a terminal device in a call service, and send indication information to a call value-added service control device. After receiving the indication information, the call value-added service control device negotiates an application data channel with the terminal device based on the indication information. In this way, the data channel control device may establish one bootstrap data channel for different services, and the terminal device receives, through the bootstrap data channel, an application corresponding to each service, which can reduce a delay, save a data channel resource, and improve efficiency of data channel negotiation. The call value-added service control device does not need to perform bootstrap data channel negotiation, but negotiates the application data channel with the terminal device, to transmit additional communication information through the application data channel. The method is described in detail in the following embodiment shown in FIG. 4 or FIG. 5, and details are not described herein.

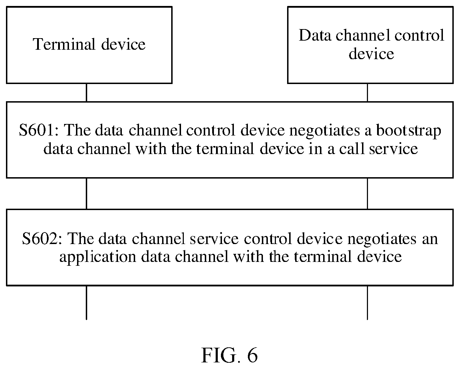

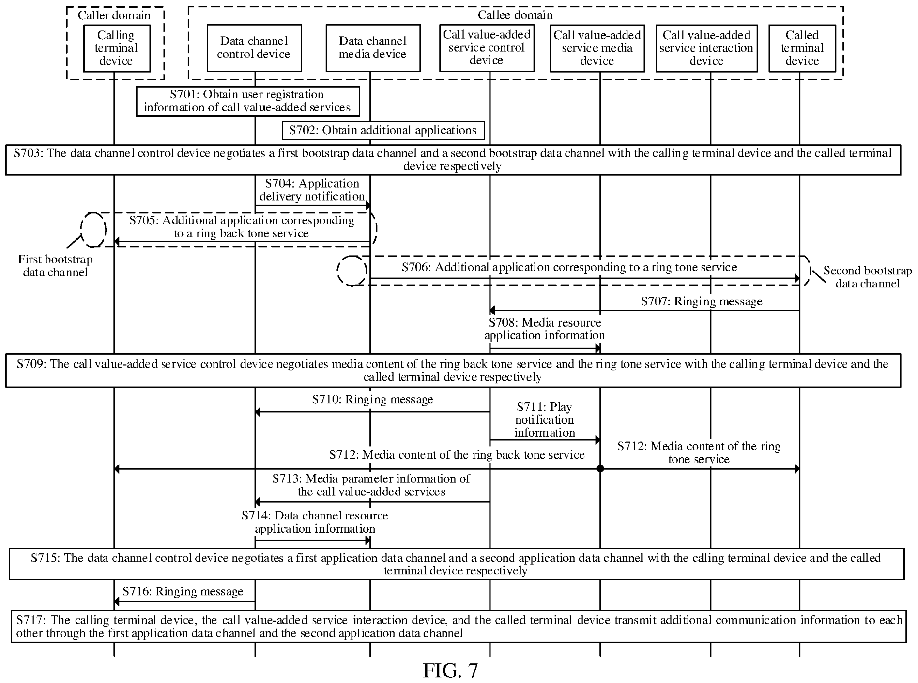

Method 2: A data channel control device may negotiate a bootstrap data channel with a terminal device in a call service, and negotiate an application data channel with the terminal device. In this way, not only additional communication information may be transmitted through the application data channel, but also the data channel control device may establish one bootstrap data channel for different services, and the terminal device receives, through the bootstrap data channel, an application corresponding to each service, which can reduce a delay, save a data channel resource, and improve efficiency of data channel negotiation. In addition, in Method 2, a call value-added service control device does not need to perform data channel negotiation, which can reduce costs of the call value-added service control device. The method is described in detail in the following embodiment shown in FIG. 6 or FIG. 7, and details are not described herein.

The following describes implementations of embodiments of this application in detail with reference to accompanying drawings.

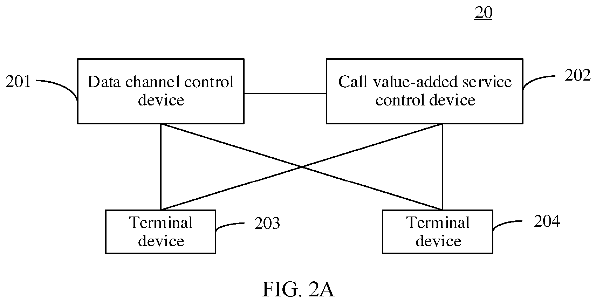

The methods provided in embodiments of this application may be applied to various communication systems. For example, the communication system may be a long term evolution (long term evolution, LTE) system, a 5G communication system, a wireless fidelity (wireless-fidelity, Wi-Fi) system, a 3GPP-related communication system, a future evolved communication system, or a system integrating a plurality of systems. This is not limited. 5G may also be referred to as new radio (new radio, NR). The following uses a communication system 20 shown in FIG. 2A as an example to describe the methods provided in embodiments of this application.

FIG. 2A is a diagram of an architecture of the communication system 20 according to an embodiment of this application. In FIG. 2A, the communication system 20 may include a data channel control device 201, a call value-added service control device 202, a terminal device 203, and a terminal device 204. The devices may be communicatively connected in a wireless manner.

In FIG. 2A, the data channel control device 201 can support negotiation of data channels for a plurality of services including a call value-added service in a call procedure, for example, a bootstrap data channel, or a bootstrap data channel and an application data channel. In this embodiment of this application, the data channel control device is a logical concept. In a specific application, the data channel control device may be constructed by extending a data channel negotiation function on an AS, for example, an MMTel AS. The data channel control device may also be named in another manner, for example, may also be referred to as a data channel AS. This is not limited.

In this embodiment of this application, the call value-added service control device may also be referred to as a call value-added service AS. If the call value-added service includes a ring back tone service, the call value-added service control device may be replaced with a ring back tone service AS. If the call value-added service includes a ring tone service, the call value-added service control device may be replaced with a ring tone service AS. It may be understood that, the ring back tone service AS and the ring tone service AS may be deployed on one device, or may be deployed on different devices. This is not limited. Optionally, the call value-added service control device 202 supports negotiation of an application data channel for the call value-added service in the call procedure.

For descriptions of the terminal device 203 and the terminal device 204, refer to the foregoing explanations of the technical terms in this application. Details are not described herein again.

The communication system 20 shown in FIG. 2A is merely used as an example, but is not intended to limit technical solutions of this application. A person skilled in the art should understand that, in a specific implementation process, the communication system 20 may further include another device, and a quantity of data channel control devices, call value-added service control devices, or terminal devices may be determined based on a specific requirement. This is not limited.

In a possible implementation, the communication system shown in FIG. 2A may be used in a network shown in FIG. 2B. The data channel control device 201 in FIG. 2A corresponds to a data channel control device in FIG. 2B, the call value-added service control device 202 in FIG. 2A corresponds to a call value-added service control device in FIG. 2B, and the terminal device 203 and the terminal device 204 in FIG. 2A correspond to terminal devices in FIG. 2B.

In addition, the network shown in FIG. 2B further includes: a data channel media device and a data channel management device that are communicatively connected to the data channel control device, a call value-added service management device and a multimedia calling line identification presentation management device that are communicatively connected to the data channel management device, a call value-added service interaction device communicatively connected to the call value-added service management device, a call value-added service media device communicatively connected to the call value-added service interaction device, an MMTel AS and a multimedia calling line identification presentation DC media server that are communicatively connected to the multimedia calling line identification presentation management device, an IMS, and a 5G core network (5G core, 5GC) communicatively connected to the IMS, and a terminal device communicatively connected to the 5GC. The IMS includes a serving CSCF (serving CSCF, S-CSCF) and/or an interrogating CSCF (interrogating CSCF, I-CSCF). The IMS further includes a home subscriber server (home subscriber server, HSS) and a session border controller (session border controller, SBC).

The S-CSCF is a central node of the IMS, and may be configured for user registration, authentication control, session routing, service triggering control, and session status information maintenance.

The I-CSCF is an initial entry point of the IMS, and may be responsible for assignment and query of an S-CSCF with which a user is registered.

The HSS may be a user database system configured to store user subscription information and location information.

The SBC may be configured to provide secure access and media and data processing during calls.

The data channel media device may be configured to provide a data channel data service on a network side, support delivery of a related application program to a terminal side based on a negotiated bootstrap data channel, and support uplink and downlink processing of related application data based on a negotiated application data channel. The data channel media device may also be named in another manner, for example, a data channel data service network element. This is not limited.

The data channel management device may provide a data channel service management function for various services including a call value-added service, for example, support release of programs of various data channel applications (such as additional applications) and service registration of data channel users. The data channel management device may also be named in another manner, for example, a data channel service management service network element. This is not limited.

The call value-added service management device may be configured to provide a management service for the call value-added service, support management for additional applications, and release the additional applications to the data channel management device; and supports interaction service management for call value-added service users, and registers, with the data channel management device, users supporting call value-added service interaction. The call value-added service management device may also be named in another manner, for example, a call value-added service management service network element. This is not limited.

The call value-added service interaction device may be configured to perform logic processing on additional communication information of the call value-added service, and perform corresponding interaction response logic processing based on reported information about an operation performed by a user on media content of the call value-added service provided on the terminal device. The call value-added service interaction device may also be named in another manner, for example, a call value-added service interaction service processing network element. This is not limited.

The call value-added service media device can support playing of audio and/or video media content of the call value-added service, and a service about the additional communication information. The call value-added service media device may also be named in another manner, for example, a call value-added service media resource function (media resource function, MRF) network element. This is not limited.

The multimedia calling line identification presentation management device may be configured to provide a management service for a multimedia calling line identification presentation service, support management for a multimedia calling line identification presentation application, and release the multimedia calling line identification presentation application to the data channel management device; and supports registration of users of the multimedia calling line identification presentation service with the data channel management device.

The MMTel AS is an AS of the multimedia calling line identification presentation service.

The multimedia calling line identification presentation DC media server can support delivery of multimedia calling line identification presentation application data to the terminal device.

It may be understood that, in a specific application, functions of the data channel management device, functions of the data channel media device, and functions of the data channel control device may be deployed on different devices, or may be deployed on a same device. This is not limited.

Similarly, functions of the call value-added service management device, functions of the call value-added service interaction device, functions of the call value-added service media device, and functions of the call value-added service control device may be deployed on different devices, or may be deployed on a same device. Functions of the multimedia calling line identification presentation management device, functions of the MMTel AS, and functions of the multimedia calling line identification presentation DC media server may be deployed on different devices, or may be deployed on a same device.

The network shown in FIG. 2B is merely used as an example, but is not intended to limit technical solutions of this application. A person skilled in the art should understand that, in a specific implementation process, the network may further include another device, and quantities of devices may be determined based on a specific requirement. This is not limited.

Optionally, each network element or device (for example, the data channel control device, the call value-added service control device, or the terminal device) in FIG. 2A or FIG. 2B in embodiments of this application may also be referred to as a communication apparatus, which may be a general-purpose device or a dedicated device. This is not specifically limited in embodiments of this application.

Optionally, a related function of each network element or device (for example, the data channel control device, the call value-added service control device, or the terminal device) in FIG. 2A or FIG. 2B in embodiments of this application may be implemented by one device, or may be implemented by a plurality of devices jointly, or may be implemented by one or more functional modules in one device. This is not specifically limited in embodiments of this application. It may be understood that the foregoing function may be a network element in a hardware device, or may be a software function running on dedicated hardware, a combination of hardware and software, or a virtualization function instantiated on a platform (for example, a cloud platform).

In a specific implementation, each network element or device (for example, the data channel control device, the call value-added service control device, or the terminal device) in FIG. 2A or FIG. 2B in embodiments of this application may use a composition structure shown in FIG. 3, or include components shown in FIG. 3. FIG. 3 is a diagram of a hardware structure of a communication apparatus that may be used in an embodiment of this application. The communication apparatus 30 includes at least one processor 301 and at least one communication interface 304, and is configured to implement a method provided in embodiments of this application. The communication apparatus 30 may further include a communication line 302 and a memory 303.

The processor 301 may be a general-purpose central processing unit (central processing unit, CPU), a microprocessor, an application-specific integrated circuit (application-specific integrated circuit, ASIC), or one or more integrated circuits configured to control program execution of solutions of this application.

The communication line 302 may include a path for transferring information between the foregoing components, for example, a bus.

The communication interface 304 is configured to communicate with another device or a communication network. The communication interface 304 may be any apparatus such as a transceiver, for example, may be an Ethernet interface, a radio access network (radio access network, RAN) interface, a wireless local area network (wireless local area network, WLAN) interface, a transceiver, a pin, a bus, or a transceiver circuit.

The memory 303 may be but is not limited to a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, and a blue-ray disc, or the like), a magnetic disk storage medium or another magnetic storage device, or any other medium that can be used to carry or store expected program code in an instruction or data structure form and that can be accessed by a computer. The memory may exist independently, and is coupled to the processor 301 by using the communication line 302. Alternatively, the memory 303 may be integrated with the processor 301. Generally, the memory provided in embodiments of this application may be non-volatile.

The memory 303 is configured to store computer-executable instructions for executing the solutions provided in embodiments of this application, and the processor 301 controls execution. The processor 301 is configured to execute the computer-executable instructions stored in the memory 303, to implement the method provided in embodiments of this application. Alternatively, optionally, in embodiments of this application, the processor 301 may perform functions related to processing in the method provided in the following embodiments of this application, and the communication interface 304 is responsible for communication with another device or a communication network. This is not specifically limited in embodiments of this application.

Optionally, the computer-executable instructions in embodiments of this application may also be referred to as application program code. This is not specifically limited in embodiments of this application.

The coupling in embodiments of this application may be an indirect coupling or a communication connection between apparatuses, units, or modules in an electrical form, a mechanical form, or another form, and is used for information exchange between the apparatuses, the units, or the modules.

In an embodiment, the processor 301 may include one or more CPUs, for example, a CPU 0 and a CPU 1 in FIG. 3.

In an embodiment, the communication apparatus 30 may include a plurality of processors, for example, the processor 301 and a processor 307 in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

In an embodiment, the communication apparatus 30 may further include an output device 305 and an input device 306. The output device 305 is coupled to the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector (projector). The input device 306 is coupled to the processor 301, and may receive user input in a plurality of manners. For example, the input device 306 may be a mouse, a keyboard, a touchscreen device, or a sensor device.

It may be understood that the composition structure shown in FIG. 3 does not constitute a limitation on the communication apparatus. In addition to the components shown in FIG. 3, the communication apparatus may include more or fewer components than those shown in the figure, or combine some components, or have a different component arrangement.

The following describes, with reference to accompanying drawings, the methods provided in embodiments of this application. Network elements in the following embodiments may have the components shown in FIG. 3, and details are not described again.

It may be understood that in embodiments of this application, "transmit" may be understood as send and/or receive based on a specific context. The "transmit" may be a noun or a verb. When an execution body of an action is not emphasized, the "transmit" is often used to substitute send and/or receive. For example, a phrase "transmit additional communication information" may be understood as "send the additional communication information" from a perspective of a transmit end, and may be understood as "receive the additional communication information" from a perspective of a receive end.

It may be understood that names of messages between devices, names of parameters in the messages, or the like in the following embodiments of this application are merely examples, and there may be other names in a specific implementation. This is not specifically limited in embodiments of this application.

It may be understood that, in embodiments of this application, "/" may represent an "or" relationship between associated objects, for example, A/B may represent A or B; "and/or" may represent that three relationships exist between the associated objects, for example, A and/or B may represent the following three cases: only A exists, both A and B exist, and only B exists, where A and B may be singular or plural. In addition, a representation similar to "at least one of A, B, and C" or "at least one of A, B, or C" usually represents any one of the following: only A exists; only B exists; only C exists; both A and B exist; both A and C exist; both B and C exist; or A, B, and C all exist. The foregoing uses three elements A, B, and C as an example to describe optional items of a project. When there are more elements in the representation, a meaning of the representation may be obtained according to the foregoing rule.

For ease of describing the technical solutions in embodiments of this application, words such as "first" and "second" may be used to distinguish between technical features having same or similar functions in embodiments of this application. The words such as "first" and "second" neither limit a quantity or an execution sequence, nor indicate a definite difference. In embodiments of this application, the word such as "example" or "for example" is used to represent giving an example, an illustration, or a description. Any embodiment or design described as "example" or "for example" should not be explained as being more preferred or advantageous over other embodiments or designs. Use of the word such as "example" or "for example" is intended to present a related concept in a specific manner, to facilitate understanding.

It may be understood that the "embodiment" throughout the specification means that particular features, structures, or characteristics related to embodiments are included in at least one embodiment of this application. Therefore, embodiments in the entire specification do not necessarily refer to a same embodiment. In addition, these particular features, structures, or characteristics may be combined in one or more embodiments in any appropriate manner. It may be understood that sequence numbers of the processes do not mean execution sequences in embodiments of this application. The execution sequences of the processes should be determined based on functions and internal logic of the processes, and should not be construed as any limitation on implementation processes of embodiments of this application.

It may be understood that, in this application, "if" may mean performing corresponding processing in an objective situation rather than limiting time, which does not require a necessary determining action during implementation, nor means any other limitation.

The term "simultaneously" in this application may be understood as occurring at a same time point, or may be understood as occurring within a period of time, or may be understood as occurring within a same periodicity.

It may be understood that, some optional features in embodiments of this application may be independently implemented in some scenarios without depending on another feature, for example, a solution on which the features are currently based, to resolve a corresponding technical problem and achieve a corresponding effect; or may be combined with another feature based on a requirement in some scenarios. Correspondingly, an apparatus provided in embodiments of this application may correspondingly implement these features or functions. Details are not described herein.

It may be understood that a same step or steps or technical features that have a same function in embodiments of this application may be mutually referenced in different embodiments.

It may be understood that, in embodiments of this application, the data channel control device and/or the call value-added service control device may perform a part of or all steps in embodiments of this application. These steps are merely examples. In embodiments of this application, other steps or variations of various steps may be further performed. In addition, the steps may be performed in a sequence different from a sequence presented in embodiments of this application, and not all the steps in embodiments of this application need to be performed.

FIG. 4 shows a communication method according to an embodiment of this application. The communication method may include the following steps.

S401: A data channel control device negotiates a bootstrap data channel with a terminal device in a call service.

In this embodiment of this application, the data channel control device may be the data channel control device 201 in the communication system 20 shown in FIG. 2A, and the terminal device may be the terminal device 203 or the terminal device 204 in the communication system 20 shown in FIG. 2A. Alternatively, the data channel control device may be the data channel control device in the network shown in FIG. 2B, and the terminal device may be any terminal device in the network shown in FIG. 2B. For descriptions of the call service and the bootstrap data channel, refer to the foregoing explanations of the technical terms in embodiments of this application. Details are not described herein again.

In this embodiment of this application, the terminal device may participate in the call service as a calling party, that is, a calling terminal device, or may participate in the call service as a called party, that is, a called terminal device. For example, if a call value-added service is a ring back tone service, the terminal device is a calling terminal device. If the call value-added service is a ring tone service, the terminal device is a called terminal device.

In a possible design, the bootstrap data channel may be used to transmit an additional application. The additional application may be configured to transmit additional communication information through an application data channel. The additional communication information is communication information generated by the additional application in response to an operation performed by a user on media content of the call value-added service provided on the terminal device. For specific descriptions of the additional application, the additional communication information, and the application data channel, refer to the foregoing explanations of the technical terms in embodiments of this application. Details are not described herein again.

In a possible design, the bootstrap data channel is a data channel between a data channel media device and the terminal device. The application data channel is a data channel between the data channel media device and the terminal device, or the application data channel is a data channel between a call value-added service media device and the terminal device. The data channel media device may be the data channel media device in the network shown in FIG. 2B, and the call value-added service media device may be the call value-added service media device in the network shown in FIG. 2B.

It may be understood that a process of negotiating the bootstrap data channel may be initiated by the data channel control device, or may be initiated by the terminal device. The following describes a specific process of negotiating the bootstrap data channel.

In a possible implementation, the data channel control device sends second media information to the terminal device. The second media information includes a parameter used to negotiate the bootstrap data channel, for example, parameters such as a port number, a bandwidth, and a size of one piece of information. After receiving the second media information, the terminal device sends second response information to the data channel control device. The second response information may indicate whether the negotiation of the bootstrap data channel succeeds. It may be understood that, if the second response information indicates that the negotiation of the bootstrap data channel succeeds, it indicates that establishment of the bootstrap data channel succeeds. If the second response information indicates that the negotiation of the bootstrap data channel fails, it indicates that establishment of the bootstrap data channel fails.

In another possible implementation, the terminal device sends third media information to the data channel control device. The third media information includes a parameter used to negotiate the bootstrap data channel, for example, parameters such as a port number, a bandwidth, and a size of one piece of information. After receiving the third media information, the data channel control device sends third response information to the terminal device. The third response information may indicate whether the negotiation of the bootstrap data channel succeeds. It may be understood that, if the third response information indicates that the negotiation of the bootstrap data channel succeeds, it indicates that establishment of the bootstrap data channel succeeds. If the third response information indicates that the negotiation of the bootstrap data channel fails, it indicates that establishment of the bootstrap data channel fails.

Optionally, before S401, the data channel control device obtains user registration information of the call value-added service. The user registration information may be used by the data channel control device to determine to negotiate the bootstrap data channel with the terminal device.

For example, in the network shown in FIG. 2B, after a user enables the call value-added service, the call value-added service management device may register the user with the data channel control device via the data channel management device, so that the data channel control device supports data channel negotiation based on user registration information in a call process. For example, after a user A enables the call value-added service, the call value-added service management device sends registration information of the user A to the data channel control device via the data channel management device. Correspondingly, the data channel control device receives the registration information of the user A from the call value-added service management device via the data channel management device.

Optionally, after S401, the data channel control device sends notification information to the data channel media device, to notify the data channel media device to send the additional application to the terminal device. After receiving the notification information, the data channel media device sends the additional application to the terminal device through the bootstrap data channel. Correspondingly, the terminal device may receive the additional application through the bootstrap data channel, and load and run the application.

Optionally, before the data channel control device sends the notification information to the data channel media device, the data channel media device obtains the additional application. In this way, after receiving the notification information, the data channel media device may send the additional application to the terminal device through the bootstrap data channel.

For example, in the network shown in FIG. 2B, after the additional application is released or updated, the call value-added service management device sends a latest additional application to the data channel media device via the data channel management device. Correspondingly, the data channel media device receives the latest additional application from the call value-added service management device via the data channel management device.

S402: The data channel control device sends indication information to a call value-added service control device. Correspondingly, the call value-added service control device receives the indication information from the data channel control device.

In this embodiment of this application, the call value-added service control device may be the call value-added service control device 202 in the communication system 20 shown in FIG. 2A, or may be the call value-added service control device in the network shown in FIG. 2B. The indication information may indicate the call value-added service control device to complete negotiation of the application data channel with the terminal device, or may indicate the call value-added service control device to negotiate the application data channel with the terminal device, or may indicate that the data channel control device completes the negotiation of the bootstrap data channel with the terminal device and the delivery of the additional application.

It may be understood that, if the indication information indicates that the data channel control device has not completed the negotiation of the bootstrap data channel with the terminal device, or the indication information indicates that the data channel control device completes the negotiation of the bootstrap data channel with the terminal device but has not completed the delivery of the additional application, the call value-added service control device may not perform S403.

In a possible design, the indication information includes a call service identifier and an identifier of the terminal device. The call service identifier includes all or a part of information of a session identifier of the call service. When the indication information carries the call service identifier, the call value-added service control device can determine to negotiate the application data channel for the call service, that is, the call value-added service control device can find the corresponding call service through matching. When the indication information carries the identifier of the terminal device, the call value-added service control device can determine to negotiate the application data channel with the terminal device.

In an example, if there is no back-to-back user agent (B2B user agent, B2BUA) between the data channel control device and the call value-added service control device, the call service identifier includes all the information of the session identifier of the call service, that is, the call service identifier includes the session identifier of the call service. If there is a B2BUA between the data channel control device and the call value-added service control device, the call service identifier includes a part of information of the session identifier of the call service. For example, the call service identifier includes a part that is in the session identifier of the call service and that can represent the call service, for example, a private header field of the session identifier of the call service.

In a possible implementation, the data channel control device sends a SIP INFO message or a hypertext transfer protocol (hypertext transfer protocol, HTTP) message to the call value-added service control device. The SIP INFO message or the HTTP message includes the indication information. Correspondingly, the call value-added service control device receives the SIP INFO message or the HTTP message.

It may be understood that, other than the SIP INFO message and the HTTP message, the indication information may alternatively be transmitted through a protocol interface agreed between the data channel control device and the call value-added service control device. This is not limited.

It may be understood that the indication information may be directly sent by the data channel control device to the call value-added service control device, or may be sent by the data channel control device to the call value-added service control device via another device. This is not limited.

S403: The call value-added service control device negotiates the application data channel with the terminal device.

In a possible implementation, the call value-added service control device sends fourth media information to the terminal device. The fourth media information includes a parameter used to negotiate the application data channel, for example, parameters such as a port number, a bandwidth, and a size of one piece of information. After receiving the fourth media information, the terminal device sends fourth response information to the call value-added service control device. The fourth response information may indicate whether the negotiation of the application data channel succeeds. It may be understood that, if the fourth response information indicates that the negotiation of the application data channel succeeds, it indicates that establishment of the application data channel succeeds. If the fourth response information indicates that the negotiation of the application data channel fails, it indicates that establishment of the application data channel fails.

It may be understood that, if the application data channel is a data channel between the data channel media device and the terminal device, the port number is a port number of the data channel media device. If the application data channel is a data channel between the call value-added service media device and the terminal device, the port number is a port number of the call value-added service media device.

In a possible implementation, the call value-added service control device negotiates the application data channel with the terminal device after receiving a ringing message from a called terminal device. For example, the call value-added service control device negotiates the application data channel with the terminal device after receiving a 180 message from the called terminal device. In this way, the call value-added service control device may synchronously complete the negotiation of the application data channel in an audio and/or video media content negotiation phase after the called terminal device rings, thereby simplifying a procedure of the call service and reducing a delay.

It may be understood that, if the call value-added service control device has not received the indication information after the called terminal device rings, the call value-added service control device may not negotiate the application data channel, but negotiates the data channel after receiving the indication information.

Actions of the data channel control device or the call value-added service control device in S401 to S403 may be performed by the processor 301 in the communication apparatus 30 shown in FIG. 3 by invoking the application program code stored in the memory 303. This is not limited in this embodiment of this application.

Based on the method shown in FIG. 4, the data channel control device may negotiate the bootstrap data channel with the terminal device, and indicate to the call value-added service control device that the negotiation of the bootstrap data channel is completed, to trigger the call value-added service control device to negotiate the application data channel with the terminal device, so that the additional communication information is transmitted through the application data channel. In addition, the data channel control device may provide a data channel negotiation service. Therefore, for a plurality of services including the call value-added service, the data channel control device may establish one bootstrap data channel to transmit an application corresponding to each service, which prevents a control device corresponding to each service from negotiating a bootstrap data channel separately to deliver an application of the service, thereby reducing a delay, saving a data channel resource, and improving efficiency of data channel negotiation.

The following describes a specific implementation process of the method shown in FIG. 4 in a call service by using an example in which the call value-added service includes the ring back tone service and the ring tone service. In the following method shown in FIG. 5, a data channel control device corresponds to the data channel control device in the network shown in FIG. 2B, a data channel media device corresponds to the data channel media device in the network shown in FIG. 2B, a call value-added service control device corresponds to the call value-added service control device in the network shown in FIG. 2B, a call value-added service media device corresponds to the call value-added service media device in the network shown in FIG. 2B, a call value-added service interaction device corresponds to the call value-added service interaction device in the network shown in FIG. 2B, and a calling terminal device and a called terminal device each correspond to one terminal device in the network in FIG. 2B.

It may be understood that explanations of features in the method shown in FIG. 4 are all applicable to the method shown in FIG. 5. Similarly, explanations of features in the method shown in FIG. 5 are also applicable to the method shown in FIG. 4.

FIG. 5 shows another communication method according to an embodiment of this application. The communication method may include the following steps.

S501: A data channel control device obtains user registration information of call value-added services.

S502: A data channel media device obtains additional applications.

For specific processes of S501 and S502, refer to corresponding descriptions in S401. Details are not described herein again.

S503: The data channel control device negotiates a first bootstrap data channel and a second bootstrap data channel with a calling terminal device and a called terminal device respectively.

It may be understood that, after the calling terminal device initiates a call to the called terminal device, the data channel control device may negotiate the first bootstrap data channel and the second bootstrap data channel with the calling terminal device and the called terminal device respectively. The first bootstrap data channel is a data channel between the data channel media device and the calling terminal device, and the second bootstrap data channel is a data channel between the data channel media device and the called terminal device.

For example, the calling terminal device sends a first invite request message to the data channel control device. The first invite request message includes an SDP offer 1. For example, when the calling terminal device supports a data channel capability, the SDP offer 1 includes a parameter used to negotiate media content of a voice call service and a parameter used to negotiate the first bootstrap data channel. After receiving the first invite request, the data channel control device negotiates the first bootstrap data channel with the calling terminal device based on the user registration information of the call value-added services, and negotiates the second bootstrap data channel with the called terminal device. A specific process is as follows:
The data channel control device sends a second invite request message to the called terminal device. The second invite request message includes an SDP offer 2. For example, the SDP offer 2 includes the parameter used to negotiate the media content of the voice call service and a parameter used to negotiate the second bootstrap data channel. After receiving the second invite request message, the called terminal device sends a 183 message to the data channel control device. The 183 message includes the parameter used to negotiate the media content of the voice call service and the parameter used to negotiate the second bootstrap data channel. After receiving the 183 message, the data channel control device sends a 183 message to the calling terminal device. The 183 message sent to the calling terminal device includes the parameter used to negotiate the media content of the voice call service and the parameter used to negotiate the first bootstrap data channel. After receiving the 183 message, the calling terminal device sends a PRACK message to the data channel control device in response to the 183 message sent by the data channel control device. After receiving the PRACK message, the data channel control device sends the PRACK message to the called terminal device in response to the 183 message sent by the called terminal device. After receiving the PRACK message, the called terminal device sends a 200 message to the data channel control device in response to the PRACK message sent by the data channel control device. After receiving the 200 message, the data channel control device sends the 200 message to the calling terminal device in response to the PRACK message sent by the calling terminal device.

After receiving the 200 message, the calling terminal device may further send a first update message to the data channel control device. The first update message may carry a parameter used to negotiate the media content of the voice call service and a parameter used to negotiate the first bootstrap data channel. After receiving the first update message, the data channel control device sends a second update message to the called terminal device. The second update message may carry the parameter used to negotiate the media content of the voice call service and the parameter used to negotiate the second bootstrap data channel. After receiving the second update message, the called terminal device sends a 200 message to the data channel control device. The 200 message carries the parameter used to negotiate the media content of the voice call service and the parameter used to negotiate the second bootstrap data channel. After receiving the 200 message, the data channel control device sends a 200 message to the calling terminal device. The 200 message carries the parameter used to negotiate the media content of the voice call service and the parameter used to negotiate the first bootstrap data channel. So far, the negotiation (or establishment) of the first bootstrap data channel and the second bootstrap data channel is completed.

It may be understood that, if the call value-added services include a ring back tone service but not a ring tone service, in S503, the SDP offer 2 does not include the parameter used to negotiate the second bootstrap data channel, and the 183 message sent by the called terminal device to the data channel control device after the called terminal device receives the second invite request message does not include the parameter used to negotiate the second bootstrap data channel. If the call value-added services include the ring tone service but not the ring back tone service, in S503, the SDP offer 1 does not include the parameter used to negotiate the first bootstrap data channel, and the 183 message sent by the data channel control device to the calling terminal device after the data channel control device receives the 183 message does not include the parameter used to negotiate the first bootstrap data channel.

Optionally, in this embodiment of this application, messages transmitted between the data channel control device and the calling terminal device and between the data channel control device and the called terminal device may be triggered based on initial filter criteria (initial filter criteria, iFC) subscription information of users of the call value-added services to pass through a call value-added service control device. For example, the second invite request message sent by the data channel control device to the called terminal device may reach the called terminal device via the call value-added service control device.

It may be understood that, if the messages transmitted between the data channel control device and the calling terminal device and between the data channel control device and the called terminal device pass through the call value-added service control device, the call value-added service control device buffers these messages.

It may be understood that, in the foregoing example, the negotiation of the first bootstrap data channel is initiated by the calling terminal device. In a specific application, the first bootstrap data channel may alternatively be initiated by the data channel control device. In this case, the first invite request message does not carry the parameter used to negotiate the first bootstrap data channel, but the data channel control device initiates the negotiation of the first bootstrap data channel after receiving the first invite request message.

S504: The data channel control device sends an application delivery notification to the data channel media device. Correspondingly, the data channel media device receives the application delivery notification from the data channel control device.

The application delivery notification may be used to notify the data channel media device to deliver applications to the calling terminal device and the called terminal device respectively.

It may be understood that, if the call value-added services include the ring back tone service but not the ring tone service, the application delivery notification is used to notify the data channel media device to deliver an application to the calling terminal device, but not used to notify the data channel media device to deliver an application to the called terminal device. If the call value-added services include the ring tone service but not the ring back tone service, the application delivery notification is used to notify the data channel media device to deliver an application to the called terminal device, but not used to notify the data channel media device to deliver an application to the calling terminal device.

S505: The data channel media device sends an additional application corresponding to the ring back tone service to the calling terminal device through the first bootstrap data channel. Correspondingly, the calling terminal device receives, from the data channel media device through the first bootstrap data channel, the additional application corresponding to the ring back tone service.

It may be understood that, after receiving the additional application corresponding to the ring back tone service, the calling terminal device loads and runs the application.

S506: The data channel media device sends an additional application corresponding to the ring tone service to the called terminal device through the second bootstrap data channel. Correspondingly, the called terminal device receives, from the data channel media device through the second bootstrap data channel, the additional application corresponding to the ring tone service.

It may be understood that, after receiving the additional application corresponding to the ring tone service, the called terminal device loads and runs the application.

It should be understood that a sequence of performing S505 and S506 is not limited in this embodiment of this application. For example, S505 may be performed before S506, or S506 may be performed before S505, or S505 and S506 may be simultaneously performed.

It may be understood that, if the call value-added services include the ring back tone service but not the ring tone service, S506 is not performed in this embodiment of this application. If the call value-added services include the ring tone service but not the ring back tone service, S505 is not performed in this embodiment of this application.

S507: The data channel control device sends indication information to the call value-added service control device. Correspondingly, the call value-added service control device receives the indication information from the data channel control device.

For a specific process of S507, refer to corresponding descriptions in S402. Details are not described herein again.

S508: The called terminal device sends a ringing message to the call value-added service control device. Correspondingly, the call value-added service control device receives the ringing message from the called terminal device.

S509: The call value-added service control device sends media resource application information to a call value-added service media device. Correspondingly, the call value-added service media device receives the media resource application information from the call value-added service control device.

For example, the call value-added service control device applies to the call value-added service media device for a ring back tone media resource (such as an audio resource, a video resource, or a resource of an application data channel) based on a media specification (such as a resolution or a coding manner) corresponding to a tone in ring back tone setting of a user corresponding to the calling terminal device. Similarly, the call value-added service control device applies to the call value-added service media device for a ring tone media resource (such as an audio resource, a video resource, or a resource of an application data channel) based on a media specification (such as a resolution or a coding manner) corresponding to a tone in ring tone setting of a user corresponding to the called terminal device. The media resource application information may include media specification information corresponding to the tone in the ring back tone setting of the user corresponding to the calling terminal device and media specification information corresponding to the tone in the ring tone setting of the user corresponding to the called terminal device.

It may be understood that, if the call value-added services include the ring back tone service but not the ring tone service, the media resource application information includes the media specification information corresponding to the tone in the ring back tone setting of the user corresponding to the calling terminal device, but does not include the media specification information corresponding to the tone in the ring tone setting of the user corresponding to the called terminal device. If the call value-added services include the ring tone service but not the ring back tone service, the media resource application information includes the media specification information corresponding to the tone in the ring tone setting of the user corresponding to the called terminal device, but does not include the media specification information corresponding to the tone in the ring back tone setting of the user corresponding to the calling terminal device.

It may be understood that S509 may alternatively be performed after S507 and before S508. This is not limited.

S510: The call value-added service control device negotiates a first application data channel and a second application data channel with the calling terminal device and the called terminal device respectively.

The first application data channel is a data channel between the data channel media device and the calling terminal device, or a data channel between the call value-added service media device and the calling terminal device. The second application data channel is a data channel between the data channel media device and the called terminal device, or a data channel between the call value-added service media device and the called terminal device.

It may be understood that, the call value-added service control device may negotiate the first application data channel and the second application data channel when negotiating media content of the ring back tone service and the ring tone service.

For example, the call value-added service control device sends a third update message to the data channel control device. The third update message carries the parameter used to negotiate the media content of the voice call service, the parameter used to negotiate the second bootstrap data channel, a parameter used to negotiate ring back tone media content, and a parameter used to negotiate the first application data channel. After receiving the third update message, the data channel control device sends a fourth update message to the calling terminal device. The fourth update message carries the parameter used to negotiate the media content of the voice call service, the parameter used to negotiate the first bootstrap data channel, the parameter used to negotiate the ring back tone media content, and the parameter used to negotiate the first application data channel (that is, the data channel control device replaces the "parameter used to negotiate the second bootstrap data channel" in the third update message with the "parameter used to negotiate the first bootstrap data channel" to obtain the fourth update message; a processing manner for subsequent messages is similar thereto and is not described). After receiving the fourth update message, the calling terminal device sends a 200 message to the data channel control device. The 200 message carries the parameter used to negotiate the media content of the voice call service, the parameter used to negotiate the first bootstrap data channel, the parameter used to negotiate the ring back tone media content, and the parameter used to negotiate the first application data channel. After receiving the 200 message, the data channel control device sends a 200 message to the call value-added service control device. The 200 message sent to the call value-added service control device carries the parameter used to negotiate the media content of the voice call service, the parameter used to negotiate the second bootstrap data channel, the parameter used to negotiate the ring back tone media content, and the parameter used to negotiate the first application data channel. After receiving the 200 message, the call value-added service control device sends a fifth update message to the called terminal device. The fifth update message carries the parameter used to negotiate the media content of the voice call service, the parameter used to negotiate the second bootstrap data channel, a parameter used to negotiate ring tone media content, and a parameter used to negotiate the second application data channel. After receiving the fifth update message, the called terminal device sends a 200 message to the call value-added service control device. The 200 message carries the parameter used to negotiate the media content of the voice call service, the parameter used to negotiate the second bootstrap data channel, the parameter used to negotiate the ring tone media content, and the parameter used to negotiate the second application data channel. So far, the negotiation (or establishment) of the first application data channel and the second application data channel is completed.

In FIG. 5, the call value-added service control device is located between the data channel control device and the called terminal device. In a specific application, the data channel control device may alternatively be located between the call value-added service control device and the called terminal device. In this case, the call value-added service control device first sends an update message to the calling terminal device. The update message carries the parameter used to negotiate the media content of the voice call service, the parameter used to negotiate the first bootstrap data channel, the parameter used to negotiate the ring back tone media content, and the parameter used to negotiate the first application data channel. After receiving the update message, the calling terminal device sends a 200 message to the call value-added service control device. The 200 message carries the parameter used to negotiate the media content of the voice call service, the parameter used to negotiate the first bootstrap data channel, the parameter used to negotiate the ring back tone media content, and the parameter used to negotiate the first application data channel. After receiving the 200 message, the call value-added service control device sends an update message to the called terminal device via the data channel control device. A process in which the call value-added service control device sends the update message to the called terminal device via the data channel control device is similar to the foregoing process in which the call value-added service control device sends the update message to the calling terminal device via the data channel control device. Refer to the foregoing corresponding descriptions. Details are not described herein again.

It may be understood that, in the foregoing example, the call value-added service control device first negotiates the first application data channel with the calling terminal device, and then negotiates the second application data channel with the called terminal device. In a specific application, the call value-added service control device may alternatively first negotiate the second application data channel with the called terminal device, and then negotiate the first application data channel with the calling terminal device. This is not limited.

It may be understood that the negotiation of the first application data channel between the call value-added service control device and the calling terminal device may be based on a precondition (Precondition) mechanism. For example, the 200 message sent by the calling terminal device may further indicate that the calling terminal device completes resource reservation. Alternatively, after sending the 200 message, the calling terminal device sends a message indicating that resource reservation is completed.

Similarly, the negotiation of the second application data channel between the call value-added service control device and the called terminal device may be based on the precondition mechanism. For example, the 200 message sent by the called terminal device may further indicate that the called terminal device completes resource reservation. Alternatively, after sending the 200 message, the called terminal device sends a message indicating that resource reservation is completed.

It may be understood that, if the call value-added services include the ring back tone service but not the ring tone service, the call value-added service control device does not send the fifth update message in S510. If the call value-added services include the ring tone service but not the ring back tone service, the call value-added service control device does not send the third update message in S510.

S511: The call value-added service control device sends the ringing message to the calling terminal device. Correspondingly, the calling terminal device receives the ringing message from the call value-added service control device.

S512: The call value-added service control device sends play notification information to the call value-added service media device. Correspondingly, the call value-added service media device receives the play notification information from the call value-added service control device.

The play notification information may be used to notify the call value-added service media device to send media content of the ring back tone service to the calling terminal device, and send media content of the ring tone service to the called terminal device.

It may be understood that, if the call value-added services include the ring back tone service but not the ring tone service, the play notification information is used to notify the call value-added service media device to send the media content of the ring back tone service to the calling terminal device, but not used to notify the call value-added service media device to send the media content of the ring tone service to the called terminal device. If the call value-added services include the ring tone service but not the ring back tone service, the play notification information is used to notify the call value-added service media device to send the media content of the ring tone service to the called terminal device, but not used to notify the call value-added service media device to send the media content of the ring back tone service to the calling terminal device.

S513: The call value-added service media device sends the media content of the ring back tone service to the calling terminal device, and sends the media content of the ring tone service to the called terminal device. Correspondingly, the calling terminal device receives the media content of the ring back tone service from the call value-added service media device, and the called terminal device receives the media content of the ring tone service from the call value-added service media device.

It may be understood that, after receiving the media content of the ring back tone service, the calling terminal device plays the media content. After receiving the media content of the ring tone service, the called terminal device plays the media content.

It may be understood that, if the call value-added services include the ring back tone service but not the ring tone service, the call value-added service media device sends the media content of the ring back tone service to the calling terminal device, but does not send the media content of the ring tone service to the called terminal device. If the call value-added services include the ring tone service but not the ring back tone service, the call value-added service media device sends the media content of the ring tone service to the called terminal device, but does not send the media content of the ring back tone service to the calling terminal device.

S514: The calling terminal device, a call value-added service interaction device, and the called terminal device transmit additional communication information to each other through the first application data channel and the second application data channel.

It may be understood that, if the first application data channel is a data channel between the call value-added service media device and the calling terminal device, and the second application data channel is a data channel between the call value-added service media device and the called terminal device, for specific descriptions of S514, refer to corresponding descriptions in S118. Details are not described herein again. If the first application data channel is a data channel between the data channel media device and the calling terminal device, and the second application data channel is a data channel between the data channel media device and the called terminal device, the call value-added service media device in S118 needs to be replaced with the data channel media device. In this case, the data channel media device is connected to the call value-added service interaction device.

It may be understood that, if the call value-added services include the ring back tone service but not the ring tone service, in response to an operation performed by the user corresponding to the calling terminal device on the media content of the call value-added service provided on the calling terminal device, the additional application loaded on the calling terminal device may generate additional communication information, and send the additional communication information to the call value-added service media device (or the data channel media device) through the first application data channel. After receiving the additional communication information, the call value-added service media device (or the data channel media device) may send the additional communication information to the call value-added service interaction device. After receiving the additional communication information, the call value-added service interaction device processes the additional communication information.

It may be understood that, if the call value-added services include the ring tone service but not the ring back tone service, in response to an operation performed by the user corresponding to the called terminal device on the media content of the call value-added service provided on the called terminal device, the additional application loaded on the called terminal device may generate additional communication information, and send the additional communication information to the call value-added service media device (or the data channel media device) through the second application data channel. After receiving the additional communication information, the call value-added service media device (or the data channel media device) may send the additional communication information to the call value-added service interaction device. After receiving the additional communication information, the call value-added service interaction device processes the additional communication information.

Actions of the data channel control device or the call value-added service control device in S501 to S514 may be performed by the processor 301 in the communication apparatus 30 shown in FIG. 3 by invoking the application program code stored in the memory 303. This is not limited in this embodiment of this application.

Based on the method shown in FIG. 5, the data channel control device may synchronously complete the negotiation of the bootstrap data channels in a call negotiation phase between a calling party and a called party, so that control devices of different services do not need to negotiate respective bootstrap data channels for delivering applications of the services, which can reduce a delay, save a data channel resource, and improve efficiency of data channel negotiation. In addition, the call value-added service control device may synchronously complete the negotiation of the application data channels in a media content negotiation phase of the call value-added services, so that the additional communication information can be transmitted through the application data channels without additional message interaction, thereby reducing a delay and improving user experience.

In addition, as described in S110, if the ringing message is sent to the calling terminal device after S110, time of playing audio and/or video media content of the call value-added services is inconsistent with time of presenting an interaction function, which affects user experience. If the ringing message is sent to the calling terminal device after S115, a call delay is increased, and user experience is affected. However, in the method shown in FIG. 5, the call value-added service control device synchronously completes the negotiation of the application data channels in the media content negotiation phase of the call value-added services. Therefore, time of playing audio and/or video media content of the call value-added services is not inconsistent with time of presenting an interaction function, a call delay is not increased, and user experience can be greatly improved.

In the method shown in FIG. 4 or the method shown in FIG. 5, the call value-added service control device negotiates the application data channel with the terminal device. This method has a high requirement on the call value-added service control device, resulting in high costs of the call value-added service control device. In a specific application, to reduce costs of the call value-added service control device, the data channel control device may be designed to negotiate the application data channel with the terminal device. The following provides detailed descriptions.

FIG. 6 shows another communication method according to an embodiment of this application. The communication method may include the following steps.

S601: A data channel control device negotiates a bootstrap data channel with a terminal device in a call service.

For a specific process of S601, refer to corresponding descriptions in S401. Details are not described herein again.

S602: The data channel control device negotiates an application data channel with the terminal device.

In the method shown in FIG. 6, the application data channel is a data channel between a data channel media device and the terminal device.

In a possible implementation, after receiving a ringing message (for example, a 180 message), the data channel control device negotiates the application data channel with the terminal device.

Optionally, after receiving the ringing message (that is, after a called terminal device rings), a call value-added service control device sends media parameter information of a call value-added service to the data channel control device. Correspondingly, the data channel control device receives the media parameter information of the call value-added service from the call value-added service control device. The media parameter information of the call value-added service includes a parameter related to negotiation of media content of the call value-added service. That is, the call value-added service control device may determine the media parameter information of the call value-added service, and send the media parameter information to the data channel control device, so that the data channel control device uses the media parameter information when negotiating the application data channel.

Optionally, after the call value-added service control device receives the ringing message (that is, after the called terminal device rings), the call value-added service control device sends a call service identifier and an identifier of the terminal device to the data channel control device. The call service identifier includes all or a part of information of a session identifier of the call service. With the call service identifier, the data channel control device can determine to negotiate the application data channel for the call service, that is, the data channel control device can find the corresponding call service through matching. With the identifier of the terminal device, the data channel control device can determine to negotiate the application data channel with the terminal device.

In an example, if there is no B2BUA between the data channel control device and the call value-added service control device, the call service identifier includes all the information of the session identifier of the call service, that is, the call service identifier includes the session identifier of the call service. If there is a B2BUA between the data channel control device and the call value-added service control device, the call service identifier includes a part of information of the session identifier of the call service. For example, the call service identifier includes a part that is in the session identifier of the call service and that can represent the call service, for example, a private header field of the session identifier of the call service.

Optionally, the media parameter information of the call value-added service, and/or the call service identifier, and/or the identifier of the terminal device are/is carried in a SIP INFO message or an HTTP message. For example, the call value-added service control device sends a SIP INFO message or an HTTP message to the data channel control device. Correspondingly, the data channel control device receives the SIP INFO message or the HTTP message from the call value-added service control device. The SIP INFO message or the HTTP message includes the media parameter information of the call value-added service, and/or the call service identifier, and/or the identifier of the terminal device.

It may be understood that, other than the SIP INFO message and the HTTP message, the media parameter information of the call value-added service, and/or the call service identifier, and/or the identifier of the terminal device may alternatively be transmitted through a protocol interface agreed between the data channel control device and the call value-added service control device. This is not limited.

In a possible implementation, the data channel control device sends first media information to the terminal device. The first media information includes the media parameter information (for example, parameters of lines a and b such as a port number, a PT value, and a media direction attribute) of the call value-added service and a parameter (for example, parameters such as a port number, a bandwidth, and a size of one piece of information) used to negotiate the application data channel. After receiving the first media information, the terminal device sends first response information to the data channel control device. The first response information may indicate whether the negotiation of the application data channel succeeds. It may be understood that, if the first response information indicates that the negotiation of the application data channel succeeds, it indicates that establishment of the application data channel succeeds. If the first response information indicates that the negotiation of the application data channel fails, it indicates that establishment of the application data channel fails.

Actions of the data channel control device or the call value-added service control device in S601 and S602 may be performed by the processor 301 in the communication apparatus 30 shown in FIG. 3 by invoking the application program code stored in the memory 303. This is not limited in this embodiment of this application.

Based on the method shown in FIG. 6, the data channel control device may negotiate the bootstrap data channel and the application data channel with the terminal device, so that additional communication information can be transmitted through the application data channel. In addition, the data channel control device may provide a data channel negotiation service. Therefore, for a plurality of services including the call value-added service, the data channel control device may establish one bootstrap data channel to transmit an application corresponding to each service, which prevents a control device corresponding to each service from negotiating a bootstrap data channel separately to deliver an application of the service. Therefore, compared with the communication method shown in FIG. 1, the communication method shown in FIG. 6 can save a data channel resource. In addition, compared with the method shown in FIG. 4, costs of the call value-added service control device can be reduced.

The following describes a specific implementation process of the method shown in FIG. 6 in a call service by using an example in which the call value-added service includes a ring back tone service and a ring tone service. In the following method shown in FIG. 7, a data channel control device corresponds to the data channel control device in the network shown in FIG. 2B, a data channel media device corresponds to the data channel media device in the network shown in FIG. 2B, a call value-added service control device corresponds to the call value-added service control device in the network shown in FIG. 2B, a call value-added service media device corresponds to the call value-added service media device in the network shown in FIG. 2B, a call value-added service interaction device corresponds to the call value-added service interaction device in the network shown in FIG. 2B, and a calling terminal device and a called terminal device each correspond to one terminal device in the network in FIG. 2B.

It may be understood that explanations of features in the method shown in FIG. 6 are all applicable to the method shown in FIG. 7. Similarly, explanations of features in the method shown in FIG. 7 are also applicable to the method shown in FIG. 6.

FIG. 7 shows another communication method according to an embodiment of this application. The communication method may include the following steps.

S701: A data channel control device obtains user registration information of call value-added services.

S702: A data channel media device obtains additional applications.

For specific processes of S701 and S702, refer to corresponding descriptions in S401. Details are not described herein again.

S703: The data channel control device negotiates a first bootstrap data channel and a second bootstrap data channel with a calling terminal device and a called terminal device respectively.

S704: The data channel control device sends an application delivery notification to the data channel media device. Correspondingly, the data channel media device receives the application delivery notification from the data channel control device.

S705: The data channel media device sends an additional application corresponding to a ring back tone service to the calling terminal device through the first bootstrap data channel. Correspondingly, the calling terminal device receives, from the data channel media device through the first bootstrap data channel, the additional application corresponding to the ring back tone service.

S706: The data channel media device sends an additional application corresponding to a ring tone service to the called terminal device through the second bootstrap data channel. Correspondingly, the called terminal device receives, from the data channel media device through the second bootstrap data channel, the additional application corresponding to the ring tone service.

For specific processes of S703 to S706, refer to corresponding descriptions in S503 to S506. Details are not described herein again.

S707: The called terminal device sends a ringing message to a call value-added service control device. Correspondingly, the call value-added service control device receives the ringing message from the called terminal device.

S708: The call value-added service control device sends media resource application information to a call value-added service media device. Correspondingly, the call value-added service media device receives the media resource application information from the call value-added service control device.

For example, the call value-added service control device applies to the call value-added service media device for a ring back tone media resource (such as an audio resource or a video resource) based on a media specification (such as a resolution or a coding manner) corresponding to a tone in ring back tone setting of a user corresponding to the calling terminal device. Similarly, the call value-added service control device applies to the call value-added service media device for a ring tone media resource (such as an audio resource or a video resource) based on a media specification (such as a resolution or a coding manner) corresponding to a tone in ring tone setting of a user corresponding to the called terminal device. The media resource application information may include media specification information corresponding to the tone in the ring back tone setting of the user corresponding to the calling terminal device and media specification information corresponding to the tone in the ring tone setting of the user corresponding to the called terminal device.

It may be understood that, if the call value-added services include the ring back tone service but not the ring tone service, the media resource application information includes the media specification information corresponding to the tone in the ring back tone setting of the user corresponding to the calling terminal device, but does not include the media specification information corresponding to the tone in the ring tone setting of the user corresponding to the called terminal device. If the call value-added services include the ring tone service but not the ring back tone service, the media resource application information includes the media specification information corresponding to the tone in the ring tone setting of the user corresponding to the called terminal device, but does not include the media specification information corresponding to the tone in the ring back tone setting of the user corresponding to the calling terminal device.

It may be understood that S708 may alternatively be performed before S707. This is not limited.

S709: The call value-added service control device negotiates media content of the ring back tone service and the ring tone service with the calling terminal device and the called terminal device respectively.

For example, the call value-added service control device sends a sixth update message to the data channel control device. The sixth update message carries a parameter used to negotiate media content of a voice call service, a parameter used to negotiate the second bootstrap data channel, and a parameter used to negotiate ring back tone media content. After receiving the sixth update message, the data channel control device sends a seventh update message to the calling terminal device. The seventh update message carries the parameter used to negotiate the media content of the voice call service, a parameter used to negotiate the first bootstrap data channel, and the parameter used to negotiate the ring back tone media content (that is, the data channel control device replaces the "parameter used to negotiate the second bootstrap data channel" in the sixth update message with the "parameter used to negotiate the first bootstrap data channel" to obtain the seventh update message; a processing manner for subsequent messages is similar thereto and is not described). After receiving the seventh update message, the calling terminal device sends a 200 message to the data channel control device. The 200 message carries the parameter used to negotiate the media content of the voice call service, the parameter used to negotiate the first bootstrap data channel, and the parameter used to negotiate the ring back tone media content. After receiving the 200 message, the data channel control device sends a 200 message to the call value-added service control device. The 200 message sent to the call value-added service control device carries the parameter used to negotiate the media content of the voice call service, the parameter used to negotiate the second bootstrap data channel, and the parameter used to negotiate the ring back tone media content. After receiving the 200 message, the call value-added service control device sends an eighth update message to the called terminal device. The eighth update message carries the parameter used to negotiate the media content of the voice call service, the parameter used to negotiate the second bootstrap data channel, and a parameter used to negotiate ring tone media content. After receiving the eighth update message, the called terminal device sends a 200 message to the call value-added service control device. The 200 message carries the parameter used to negotiate the media content of the voice call service, the parameter used to negotiate the second bootstrap data channel, and the parameter used to negotiate the ring tone media content. So far, the negotiation of the media content of the ring back tone service and the ring tone service is completed.

In FIG. 7, the call value-added service control device is located between the data channel control device and the called terminal device. In a specific application, the data channel control device may alternatively be located between the call value-added service control device and the called terminal device. In this case, the call value-added service control device first sends an update message to the calling terminal device. The update message carries the parameter used to negotiate the media content of the voice call service, the parameter used to negotiate the first bootstrap data channel, and the parameter used to negotiate the ring back tone media content. After receiving the update message, the calling terminal device sends a 200 message to the call value-added service control device. The 200 message carries the parameter used to negotiate the media content of the voice call service, the parameter used to negotiate the first bootstrap data channel, and the parameter used to negotiate the ring back tone media content. After receiving the 200 message, the call value-added service control device sends an update message to the called terminal device via the data channel control device. A process in which the call value-added service control device sends the update message to the called terminal device via the data channel control device is similar to the foregoing process in which the call value-added service control device sends the update message to the calling terminal device via the data channel control device. Refer to the foregoing corresponding descriptions. Details are not described herein again.

It may be understood that, in the foregoing example, the call value-added service control device first negotiates the media content of the ring back tone service with the calling terminal device, and then negotiates the media content of the ring tone service with the called terminal device. In a specific application, the call value-added service control device may alternatively first negotiate the media content of the ring tone service with the called terminal device first, and then negotiate the media content of the ring back tone service with the calling terminal device. This is not limited.

It may be understood that the negotiation of the media content of the ring back tone service may be based on a precondition (Precondition) mechanism. For example, the 200 message sent by the calling terminal device may further indicate that the calling terminal device completes resource reservation. Alternatively, after sending the 200 message, the calling terminal device sends a message indicating that resource reservation is completed.

Similarly, the negotiation of the media content of the ring tone service may be based on the precondition mechanism. For example, the 200 message sent by the called terminal device may further indicate that the called terminal device completes resource reservation. Alternatively, after sending the 200 message, the called terminal device sends a message indicating that resource reservation is completed.

It may be understood that, if the call value-added services include the ring back tone service but not the ring tone service, the call value-added service control device does not send the eighth update message in S709. If the call value-added services include the ring tone service but not the ring back tone service, the call value-added service does not send the sixth update message in S510.

S710: The call value-added service control device sends the ringing message to the data channel control device. Correspondingly, the data channel control device receives the ringing message from the call value-added service control device.

S711: The call value-added service control device sends play notification information to the call value-added service media device. Correspondingly, the call value-added service media device receives the play notification information from the call value-added service control device.

S712: The call value-added service media device sends the media content of the ring back tone service to the calling terminal device, and sends the media content of the ring tone service to the called terminal device. Correspondingly, the calling terminal device receives the media content of the ring back tone service from the call value-added service media device, and the called terminal device receives the media content of the ring tone service from the call value-added service media device.

For specific processes of S710 to S712, refer to corresponding descriptions in S511 to S513.

S713: The call value-added service control device sends media parameter information of the call value-added services to the data channel control device. Correspondingly, the data channel control device receives the media parameter information of the call value-added services from the call value-added service control device.

The media parameter information of the call value-added service includes the parameter used to negotiate the ring back tone media content and the parameter used to negotiate the ring tone media content in S709.

Optionally, the call value-added service control device sends a call service identifier, an identifier of the calling terminal device, and an identifier of the called terminal device to the data channel control device. For details, refer to corresponding descriptions in the method shown in FIG. 6.

S714: The data channel control device sends data channel resource application information to the data channel media device. Correspondingly, the data channel media device receives the data channel resource application information from the data channel control device.

The data channel resource application information may be used to apply to the data channel media device for a data channel resource.

S715: The data channel control device negotiates a first application data channel and a second application data channel with the calling terminal device and the called terminal device respectively.

The first application data channel is a data channel between the data channel media device and the calling terminal device. The second application data channel is a data channel between the data channel media device and the called terminal device.

A specific process of S715 is as follows: The data channel control device sends a ninth update message to the calling terminal device. The ninth update message carries the parameter used to negotiate the media content of the voice call service, the parameter used to negotiate the first bootstrap data channel, the parameter used to negotiate the ring back tone media content, and a parameter used to negotiate the first application data channel. After receiving the ninth update message, the calling terminal device sends a 200 message to the data channel control device. The 200 message carries the parameter used to negotiate the media content of the voice call service, the parameter used to negotiate the first bootstrap data channel, the parameter used to negotiate the ring back tone media content, and the parameter used to negotiate the first application data channel. After receiving the 200 message, the data channel control device sends a tenth update message to the called terminal device via the call value-added service control device. The tenth update message carries the parameter used to negotiate the media content of the voice call service, the parameter used to negotiate the second bootstrap data channel, the parameter used to negotiate the ring tone media content, and a parameter used to negotiate the second application data channel. After receiving the tenth update message, the called terminal device sends a 200 message to the data channel control device via the call value-added service control device. The 200 message carries the parameter used to negotiate the media content of the voice call service, the parameter used to negotiate the second bootstrap data channel, the parameter used to negotiate the ring tone media content, and the parameter used to negotiate the second application data channel. So far, the negotiation (or establishment) of the first application data channel and the second application data channel is completed.

It may be understood that, in the foregoing example, the data channel control device first negotiates the first application data channel with the calling terminal device, and then negotiates the second application data channel with the called terminal device. In a specific application, the data channel control device may alternatively first negotiate the second application data channel with the called terminal device, and then negotiate the first application data channel with the calling terminal device. This is not limited.

It may be understood that the negotiation of the first application data channel between the data channel control device and the calling terminal device may be based on a precondition (Precondition) mechanism. For example, the 200 message sent by the calling terminal device may further indicate that the calling terminal device completes resource reservation. Alternatively, after sending the 200 message, the calling terminal device sends a message indicating that resource reservation is completed.

Similarly, the negotiation of the second application data channel between the data channel control device and the called terminal device may be based on the precondition mechanism. For example, the 200 message sent by the called terminal device may further indicate that the called terminal device completes resource reservation. Alternatively, after sending the 200 message, the called terminal device sends a message indicating that resource reservation is completed.

It may be understood that, if the call value-added services include the ring back tone service but not the ring tone service, the data channel control device does not send the tenth update message in S715. If the call value-added services include the ring tone service but not the ring back tone service, the call value-added service control device does not send the ninth update message in S715.

S716: The data channel control device sends the ringing message to the calling terminal device. Correspondingly, the calling terminal device receives the ringing message from the data channel control device.

S717: The calling terminal device, a call value-added service interaction device, and the called terminal device transmit additional communication information to each other through the first application data channel and the second application data channel.

It may be understood that, for specific descriptions of S717, refer to corresponding descriptions in S118. A difference is that because the first application data channel is a data channel between the data channel media device and the calling terminal device, and the second application data channel is a data channel between the data channel media device and the called terminal device, the call value-added service media device in S118 needs to be replaced with the data channel media device. In this case, the data channel media device is connected to the call value-added service interaction device.

It may be understood that, if the call value-added services include the ring back tone service but not the ring tone service, in response to an operation performed by the user corresponding to the calling terminal device on the media content of the call value-added service provided on the calling terminal device, the additional application loaded on the calling terminal device may generate additional communication information, and send the additional communication information to the data channel media device through the first application data channel. After receiving the additional communication information, the data channel media device may send the additional communication information to the call value-added service interaction device. After receiving the additional communication information, the call value-added service interaction device processes the additional communication information.

It may be understood that, if the call value-added services include the ring tone service but not the ring back tone service, in response to an operation performed by the user corresponding to the called terminal device on the media content of the call value-added service provided on the called terminal device, the additional application loaded on the called terminal device may generate additional communication information, and send the additional communication information to the data channel media device through the second application data channel. After receiving the additional communication information, the data channel media device may send the additional communication information to the call value-added service interaction device. After receiving the additional communication information, the call value-added service interaction device processes the additional communication information.

Actions of the data channel control device or the call value-added service control device in S701 to S717 may be performed by the processor 301 in the communication apparatus 30 shown in FIG. 3 by invoking the application program code stored in the memory 303. This is not limited in this embodiment of this application.

Based on the method shown in FIG. 7, the data channel control device may synchronously complete the negotiation of the bootstrap data channels in a call negotiation phase between a calling party and a called party, so that control devices of different services do not need to negotiate respective bootstrap data channels for delivering applications of the services, which can reduce a delay, save a data channel resource, and improve efficiency of data channel negotiation. In addition, the data channel control device may further complete the negotiation of the application data channels after the negotiation of the media content of the call value-added services is completed, so that the additional communication information can be transmitted through the application data channels. Although a delay of the method shown in FIG. 7 is longer than a delay of the method shown in FIG. 5, the method shown in FIG. 7 does not require the call value-added service control device to have a capability to negotiate an application data channel, so that costs of the call value-added service control device are low.

In the method shown in FIG. 5 and the method shown in FIG. 7, the data channel control device, the data channel media device, the call value-added service control device, the call value-added service media device, and the call value-added service interaction device are all located in a callee domain. In a specific application, the foregoing devices may alternatively be located in a caller domain. This is not limited.

The embodiments mentioned above in this application may be combined when the solutions do not conflict. This is not limited.

It may be understood that, in the foregoing embodiments, methods and/or steps implemented by the data channel control device may alternatively be implemented by a component (for example, a chip or a circuit) that may be used for the data channel control device, and methods and/or steps implemented by the call value-added service control device may alternatively be implemented by a component (for example, a chip or a circuit) that may be used for the call value-added service control device.

The foregoing mainly describes, from a perspective of interaction between network elements, the solutions provided in embodiments of this application. Correspondingly, an embodiment of this application further provides a communication apparatus. The communication apparatus may be the data channel control device in the foregoing method embodiment, or an apparatus including the data channel control device, or a component that can be used for the data channel control device. Alternatively, the communication apparatus may be the call value-added service control device in the foregoing method embodiment, or an apparatus including the call value-added service control device, or a component that can be used for the call value-added service control device. It may be understood that, to implement the foregoing functions, the data channel control device or the call value-added service control device includes a corresponding hardware structure and/or software module for performing each function. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the data channel control device or the call value-added service control device may be divided into functional modules based on the foregoing method example. For example, each functional module may be obtained through division based on each corresponding function, or two or more functions may be integrated into one processing module. The integrated module may be implemented in a form of hardware, or may be implemented in a form of a software functional module. It may be understood that, module division in embodiments of this application is an example, and is merely logical function division. In an actual implementation, another division manner may be used.

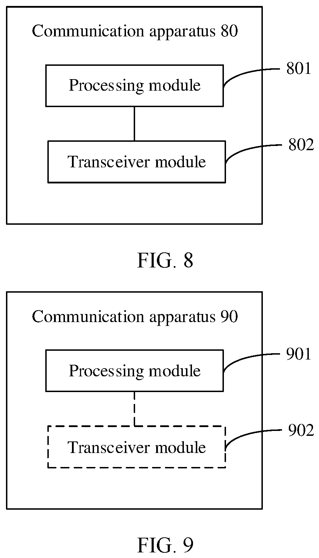

For example, when functional modules are obtained through division in an integrated manner, FIG. 8 is a diagram of a structure of a communication apparatus 80. The communication apparatus 80 includes a processing module 801 and a transceiver module 802. The processing module 801 may also be referred to as a processing unit, and is configured to perform an operation other than receiving and sending operations, which may be, for example, a processing circuit or a processor. The transceiver module 802 may also be referred to as a transceiver unit, and is configured to perform the receiving and sending operations, which may be, for example, a transceiver circuit, a transceiver machine, a transceiver, or a communication interface.

In some embodiments, the communication apparatus 80 may further include a storage module (not shown in FIG. 8), configured to store program instructions and data.

For example, the communication apparatus 80 is configured to implement a function of the data channel control device. The communication apparatus 80 is, for example, the data channel control device in the embodiment shown in FIG. 4 or the embodiment shown in FIG. 5. For example, the processing module 801 may be configured to perform S401, or the processing module 801 may be configured to perform S501 and/or S503. The transceiver module 802 may be configured to perform S402, or the transceiver module 802 may be configured to perform S507.

When the function of the data channel control device is implemented, for other functions that can be implemented by the communication apparatus 80, refer to related descriptions in the method embodiment shown in FIG. 4 or the embodiment shown in FIG. 5. Details are not described again.

Alternatively, for example, the communication apparatus 80 is configured to implement a function of the call value-added service control device. The communication apparatus 80 is, for example, the call value-added service control device in the embodiment shown in FIG. 4 or the embodiment shown in FIG. 5. For example, the processing module 801 may be configured to perform S403, or the processing module 801 may be configured to perform S510. The transceiver module 802 may be configured to perform S402, or the transceiver module 802 may be configured to perform S507.

When the function of the call value-added service control device is implemented, for other functions that can be implemented by the communication apparatus 80, refer to related descriptions in the method embodiment shown in FIG. 4 or the embodiment shown in FIG. 5. Details are not described again.

Alternatively, for example, the communication apparatus 80 is configured to implement a function of the call value-added service control device. The communication apparatus 80 is, for example, the call value-added service control device in the embodiment shown in FIG. 6 or the embodiment shown in FIG. 7. For example, the transceiver module 802 may be configured to perform S713.

When the function of the call value-added service control device is implemented, for other functions that can be implemented by the communication apparatus 80, refer to related descriptions in the method embodiment shown in FIG. 6 or the embodiment shown in FIG. 7. Details are not described again.

In a simple embodiment, a person skilled in the art may figure out that the communication apparatus 80 may be in a form shown in FIG. 3. For example, the processor 301 in FIG. 3 may invoke the computer-executable instructions stored in the memory 303, to enable the communication apparatus 80 to perform the method in the foregoing method embodiment.

For example, functions/implementation processes of the processing module 801 and the transceiver module 802 in FIG. 8 may be implemented by the processor 301 in FIG. 3 by invoking the computer-executable instructions stored in the memory 303. Alternatively, a function/an implementation process of the processing module 801 in FIG. 8 may be implemented by the processor 301 in FIG. 3 by invoking the computer-executable instructions stored in the memory 303, and a function/an implementation process of the transceiver module 802 in FIG. 8 may be implemented by the communication interface 304 in FIG. 3.

For example, when functional modules are obtained through division in an integrated manner,

FIG. 9 is a diagram of a structure of a communication apparatus 90. The communication apparatus 90 includes a processing module 901. Optionally, the communication apparatus 90 further includes a transceiver module 902. The processing module 901 may also be referred to as a processing unit, and is configured to perform an operation other than receiving and sending operations, which may be, for example, a processing circuit or a processor. The transceiver module 902 may also be referred to as a transceiver unit, and is configured to perform the receiving and sending operations, which may be, for example, a transceiver circuit, a transceiver machine, a transceiver, or a communication interface.

In some embodiments, the communication apparatus 90 may further include a storage module (not shown in FIG. 9), configured to store program instructions and data.

For example, the communication apparatus 90 is configured to implement a function of the data channel control device. The communication apparatus 90 is, for example, the data channel control device in the embodiment shown in FIG. 6 or the embodiment shown in FIG. 7. For example, the processing module 901 may be configured to perform S601 and/or S602, or the processing module 901 may be configured to perform S703 and/or S715. The transceiver module 902 may be configured to perform S713.

When the function of the data channel control device is implemented, for other functions that can be implemented by the communication apparatus 90, refer to related descriptions in the method embodiment shown in FIG. 6 or the embodiment shown in FIG. 7. Details are not described again.

In a simple embodiment, a person skilled in the art may figure out that the communication apparatus 90 may be in a form shown in FIG. 3. For example, the processor 301 in FIG. 3 may invoke the computer-executable instructions stored in the memory 303, to enable the communication apparatus 90 to perform the method in the foregoing method embodiment.

For example, functions/implementation processes of the processing module 901 and the transceiver module 902 in FIG. 9 may be implemented by the processor 301 in FIG. 3 by invoking the computer-executable instructions stored in the memory 303. Alternatively, a function/an implementation process of the processing module 901 in FIG. 9 may be implemented by the processor 301 in FIG. 3 by invoking the computer-executable instructions stored in the memory 303, and a function/an implementation process of the transceiver module 902 in FIG. 9 may be implemented by the communication interface 304 in FIG. 3.

It may be understood that one or more of the foregoing modules or units may be implemented by using software, hardware, or a combination thereof. When any one of the foregoing modules or units is implemented by software, the software exists in a form of computer program instructions, and is stored in the memory. The processor may be configured to execute the program instructions and implement the foregoing method procedure. The processor may be built into a SoC (system on chip) or an ASIC, or may be an independent semiconductor chip. In addition to a core configured to perform operations or processing by executing software instructions, the processor may further include a necessary hardware accelerator, for example, a field programmable gate array (field programmable gate array, FPGA), a PLD (programmable logic device), or a logic circuit that implements a dedicated logic operation.

When the foregoing module or unit is implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, which may run necessary software or does not depend on software to perform the foregoing method procedure.

Optionally, an embodiment of this application further provides a chip system, including: at least one processor and an interface. The at least one processor is coupled to a memory by using an interface. When the at least one processor executes a computer program or instructions in the memory, the method in any one of the foregoing method embodiments is performed. In a possible implementation, the chip system further includes the memory. Optionally, the chip system may include a chip, or may include a chip and another discrete component. This is not specifically limited in this embodiment of this application.

Optionally, an embodiment of this application further provides a computer-readable storage medium. All or a part of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit of the communication apparatus in any one of the foregoing embodiments, for example, a hard disk drive or an internal memory of the communication apparatus. Alternatively, the computer-readable storage medium may be an external storage device of the communication apparatus, for example, a plug-in hard disk drive, a smart media card (smart media card, SMC), a secure digital (secure digital, SD) card, or a flash card (flash card) configured on the communication apparatus. Alternatively, the computer readable storage medium may include both the internal storage unit and the external storage device of the communication apparatus. The computer-readable storage medium is configured to store the foregoing computer program, and other programs and data that are required by the communication apparatus. The computer-readable storage medium may be further configured to temporarily store data that has been output or is to be output.

Optionally, an embodiment of this application further provides a computer program product. All or a part of procedures in the foregoing method embodiments may be implemented by a computer program instructing related hardware. The program may be stored in the computer program product. When the program is executed, the procedures in the foregoing method embodiments may be performed.

Optionally, an embodiment of this application further provides computer instructions. All or a part of procedures in the foregoing method embodiments may be implemented by computer instructions instructing related hardware (such as a computer, a processor, a data channel control device, or a call value-added service control device). The program may be stored in the foregoing computer-readable storage medium or computer program product.

Optionally, an embodiment of this application further provides a communication system, including the data channel control device and the call value-added service control device in the foregoing embodiments.

From the foregoing descriptions of implementations, a person skilled in the art can clearly understand that, for the purpose of convenient and brief description, only division of the foregoing functional modules is used as an example for illustration. In an actual application, the foregoing functions can be allocated to different modules and implemented as required. In other words, an internal structure of an apparatus is divided into different functional modules to implement all or a part of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in an actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. A part of or all units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, wherein the method comprises:
negotiating, by a data channel control device, a bootstrap data channel with a terminal device in a call service, wherein the bootstrap data channel is used to transmit an additional application, the additional application is configured to transmit additional communication information through an application data channel, and the additional communication information is communication information generated by the additional application in response to an operation performed by a user on media content of a call value-added service provided on the terminal device; and
sending, by the data channel control device, indication information to a call value-added service control device, wherein the indication information indicates the call value-added service control device to complete negotiation of the application data channel with the terminal device.

2. The method according to claim 1, comprising:
the bootstrap data channel is a data channel between a data channel media device and the terminal device; and
the application data channel is a data channel between the data channel media device and the terminal device, or the application data channel is a data channel between a call value-added service media device and the terminal device.

3. The method according to claim 1 or 2, wherein the indication information comprises a call service identifier and an identifier of the terminal device, and the call service identifier comprises all or a part of information of a session identifier of the call service.

4. The method according to any one of claims 1 to 3, wherein the sending, by the data channel control device, indication information to a call value-added service control device comprises:
sending, by the data channel control device, a session initiation protocol SIP INFO message or a hypertext transfer protocol HTTP message to the call value-added service control device, wherein the SIP INFO message or the HTTP message comprises the indication information.

5. The method according to any one of claims 1 to 4, wherein
the call value-added service is a ring back tone service, and the terminal device is a calling terminal device; or
the call value-added service is a ring tone service, and the terminal device is a called terminal device.

6. The method according to any one of claims 1 to 5, wherein before the negotiating, by a data channel control device, a bootstrap data channel with a terminal device in a call service, the method further comprises:
obtaining, by the data channel control device, user registration information of the call value-added service, wherein the user registration information is used by the data channel control device to determine to negotiate the bootstrap data channel with the terminal device.

7. The method according to any of claims 1 to 6, wherein the call value-added service control device is a ring back tone service application server and/or a ring tone service application server.

8. A communication method, wherein the method comprises:
receiving, by a call value-added service control device, indication information from a data channel control device, wherein the indication information indicates the call value-added service control device to complete negotiation of an application data channel with a terminal device in a call service, the application data channel is used to transmit additional communication information, and the additional communication information is communication information generated by an additional application in response to an operation performed by a user on media content of a call value-added service provided on the terminal device; and
negotiating, by the call value-added service control device, the application data channel with the terminal device.

9. The method according to claim 8, wherein
the application data channel is a data channel between a data channel media device and the terminal device, or the application data channel is a data channel between a call value-added service media device and the terminal device.

10. The method according to claim 8 or 9, wherein the indication information comprises a call service identifier and an identifier of the terminal device, and the call service identifier comprises all or a part of information of a session identifier of the call service.

11. The method according to claim 10, comprising:
the call service identifier is used by the call value-added service control device to determine to negotiate the application data channel for the call service; and
the identifier of the terminal device is used by the call value-added service control device to determine to negotiate the application data channel with the terminal device.

12. The method according to any one of claims 8 to 11, wherein the receiving, by a call value-added service control device, indication information from a data channel control device comprises:
receiving, by the call value-added service control device, a session initiation protocol SIP INFO message or a hypertext transfer protocol HTTP message from the data channel control device, wherein the SIP INFO message or the HTTP message comprises the indication information.

13. The method according to any one of claims 8 to 12, wherein the call value-added service is a ring back tone service, and the terminal device is a calling terminal device.

14. The method according to claim 13, wherein the negotiating, by the call value-added service control device, the application data channel with the terminal device comprises:
negotiating, by the call value-added service control device, the application data channel with the terminal device after receiving a ringing message from a called terminal device.

15. The method according to any one of claims 8 to 12, wherein the call value-added service is a ring tone service, and the terminal device is a called terminal device.

16. The method according to claim 15, wherein the negotiating, by the call value-added service control device, the application data channel with the terminal device comprises:
negotiating, by the call value-added service control device, the application data channel with the terminal device after receiving a ringing message from the terminal device.

17. The method according to any of claims 8 to 16, wherein the call value-added service control device is a ring back tone service application server and/or a ring tone service application server.

18. A communication method, wherein the method comprises:
negotiating, by a data channel control device, a bootstrap data channel with a terminal device in a call service, wherein the bootstrap data channel is used to transmit an additional application, the additional application is configured to transmit additional communication information through an application data channel, and the additional communication information is communication information generated by the additional application in response to an operation performed by a user on media content of a call value-added service provided on the terminal device;
sending, by the data channel control device, indication information to a call value-added service control device, wherein the indication information indicates the call value-added service control device to complete negotiation of the application data channel with the terminal device;
receiving, by the call value-added service control device, the indication information from the data channel control device; and
negotiating, by the call value-added service control device, the application data channel with the terminal device.

19. The method according to claim 18, wherein
the bootstrap data channel is a data channel between a data channel media device and the terminal device; and
the application data channel is a data channel between the data channel media device and the terminal device, or the application data channel is a data channel between a call value-added service media device and the terminal device.

20. The method according to claim 18 or 19, wherein the indication information comprises a call service identifier and an identifier of the terminal device, and the call service identifier comprises all or a part of information of a session identifier of the call service.

21. The method according to any one of claims 18 to 20, wherein the sending, by the data channel control device, indication information to a call value-added service control device comprises:
sending, by the data channel control device, a session initiation protocol SIP INFO message or a hypertext transfer protocol HTTP message to the call value-added service control device, wherein the SIP INFO message or the HTTP message comprises the indication information.

22. The method according to any one of claims 18 to 21, wherein the call value-added service is a ring back tone service, and the terminal device is a calling terminal device.

23. The method according to claim 22, wherein the negotiating, by the call value-added service control device, the application data channel with the terminal device comprises:
negotiating, by the call value-added service control device, the application data channel with the terminal device after receiving a ringing message from a called terminal device.

24. The method according to any one of claims 18 to 21, wherein the call value-added service is a ring tone service, and the terminal device is a called terminal device.

25. The method according to claim 24, wherein the negotiating, by the call value-added service control device, the application data channel with the terminal device comprises:
negotiating, by the call value-added service control device, the application data channel with the terminal device after receiving a ringing message from the terminal device.

26. The method according to any one of claims 18 to 25, wherein before the negotiating, by a data channel control device, a bootstrap data channel with a terminal device in a call service, the method further comprises:
obtaining, by the data channel control device, user registration information of the call value-added service, wherein the user registration information is used by the data channel control device to determine to negotiate the bootstrap data channel with the terminal device.

27. The method according to any of claims 18 to 26, wherein the call value-added service control device is a ring back tone service application server and/or a ring tone service application server.

28. A communication apparatus, comprising a unit or a module configured to perform the method according to any one of claims 1 to 7, or a unit or a module configured to perform the method according to any one of claims 8 to 17.

29. A communication apparatus, comprising a processor, wherein the processor is coupled to a memory, the memory is configured to store a program or instructions, and when the program or the instructions are executed by the processor, the apparatus is enabled to perform the method according to any one of claims 1 to 7 or the method according to any one of claims 8 to 17.

30. A chip, comprising a processor, wherein the processor is coupled to a memory, the memory is configured to store a program or instructions, and when the program or the instructions are executed by the processor, the chip is enabled to perform the method according to any one of claims 1 to 7 or the method according to any one of claims 8 to 17.

31. A computer-readable storage medium, wherein the computer-readable storage medium stores a computer program or instructions, and when the computer program or the instructions are executed, a computer is enabled to perform the method according to any one of claims 1 to 7 or the method according to any one of claims 8 to 17.

32. A communication system, comprising a data channel control device configured to perform the method according to any one of claims 1 to 7, and a call value-added service control device configured to perform the method according to any one of claims 8 to 17.
